(19) Europäisches Patentamt / European Patent Office / Office européen des brevets

(11) EP 3 165 572 B1

(12) **EUROPEAN PATENT SPECIFICATION**

(45) Date of publication and mention of the grant of the patent:
**22.05.2019 Bulletin 2019/21**

(21) Application number: **15814337.0**

(22) Date of filing: **02.07.2015**

(51) Int Cl.:
***C08L 71/02*** *(2006.01)* ***C08L 33/04*** *(2006.01)*
***C09K 3/10*** *(2006.01)* ***C08G 65/336*** *(2006.01)*

(86) International application number:
**PCT/JP2015/069202**

(87) International publication number:
**WO 2016/002907 (07.01.2016 Gazette 2016/01)**

(54) **CURABLE COMPOSITION AND CURED OBJECT OBTAINED THEREFROM**

HÄRTBARE ZUSAMMENSETZUNG UND DAMIT HERGESTELLTES GEHÄRTETES PRODUKT

COMPOSITION DURCISSABLE ET OBJET DURCI OBTENU À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2014 JP 2014137086**

(43) Date of publication of application:
**10.05.2017 Bulletin 2017/19**

(73) Proprietor: **Kaneka Corporation**
**Osaka-shi, Osaka 530-8288 (JP)**

(72) Inventors:
- **HARUMASHI, Tatsuro**
**Takasago-shi**
**Hyogo 676-8688 (JP)**
- **ITANO, Yu**
**Takasago-shi**
**Hyogo 676-8688 (JP)**
- **MIYAFUJI, Kiyoshi**
**Takasago-shi**
**Hyogo 676-8688 (JP)**

(74) Representative: **Vossius & Partner**
**Patentanwälte Rechtsanwälte mbB**
**Siebertstrasse 3**
**81675 München (DE)**

(56) References cited:
**EP-A1- 2 604 655** **WO-A1-2013/180203**
**WO-A1-2013/180203** **JP-A- 2007 023 255**
**JP-A- 2014 111 783** **JP-A- 2014 114 434**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 165 572 B1

## Description

[Technical Field]

The present invention relates to a curable composition comprising reactive silicon group-containing polyoxyalkylene-based polymer (A) having more than 1.0 reactive silicon group on average at one terminal and reactive silicon group-containing (meth)acrylate-based polymer (B) as defined in the present claims.

[Background Art]

A curable composition using a reactive silicon group-containing polyoxyalkylene polymer, in particular, a polyoxypropylene polymer, is widely used as a sealing material since it becomes a rubber elastic body by curing. Furthermore, a curable composition containing a polymer having a reactive silicon group in the molecule and comprising an acrylic acid alkyl ester monomer unit and/or an alkyl methacrylate monomer unit, is used as an elastic adhesive, a sealing material for exterior use and the like, since it further improves adhesiveness and weather resistance (patent documents 1 - 4). Sealing materials are required to have high strength and high elongation at the same time. However, the curable compositions containing a reactive silicon group-containing polymer and described in patent documents 1 - 4 are not necessarily capable of affording a cured product having sufficiently high elongation and sufficiently high strength, and further improvement is desired.

Patent Document 5 describes a polyoxyalkylene-based polymer having a plurality of reactive silicon groups at one terminal. It is also described that a reactive silicon group-containing acrylic polymer is mixed with such polyoxyalkylene polymer.

[Document List]

[Patent documents]

patent document 1: JP-A-07-258535
patent document 2: JP-A-2006-37076
patent document 3: JP-A-2012-107103
patent document 4: JP-A-2013-147575
patent document 5: WO 2013/180203

[SUMMARY OF THE INVENTION]

[Problems to be Solved by the Invention]

An object of the present invention is to provide a curable composition improved in elongation and strength after curing and a cured product obtained from the curable composition.

[Means of Solving the Problems]

The present inventors have conducted intensive studies to solve the above-mentioned problem and completed the following invention.

That is, the present invention relates to

[1] A curable composition comprising reactive silicon group-containing polyoxyalkylene-based polymer (A) having more than 1.0 reactive silicon group on average at one terminal portion, and reactive silicon group-containing (meth)acrylate-based polymer (B) as defined in the present claims having not less than 1.6 reactive silicon group on average per one molecule, which is represented by the formula (1) :

$$-SiRX_2 \qquad (1)$$

wherein R is a hydrocarbon group having 1 - 20 carbon atoms and optionally having substituent(s) which is/are a hetero atom-containing group or a halogen atom, and X is a hydroxyl group or a hydrolyzable group,

[2] the curable composition of the above-mentioned [1], wherein the terminal portion of the polyoxyalkylene-based

polymer (A) has a structure represented by the formula (2):

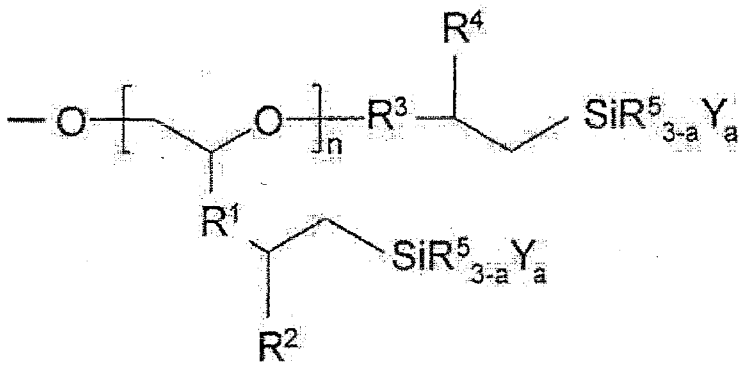

(2)

wherein $R^1$ and $R^3$ are each independently a divalent linking group having 1 - 6 carbon atoms, and an atom that binds to each adjacent carbon atom is any of carbon, oxygen and nitrogen, $R^2$ and $R^4$ are each independently hydrogen or a hydrocarbon group having 1 - 10 carbon atoms, n is an integer of 1 to 10, each $R^5$ is independently a hydrocarbon group having 1 - 20 carbon atoms and optionally having substituent(s) which is/are a hetero atom-containing group or a halogen atom, Y is a hydroxyl group or a hydrolyzable group, and a is any of 1, 2 and 3,

[3] the curable composition of the above-mentioned [1] or [2], wherein the reactive silicon group-containing polyoxyalkylene-based polymer (A) is obtained by allowing an action, on a polymer having a hydroxyl group on the terminal, of 0.6 equivalent or more of an alkali metal salt relative to the hydroxyl group, which is followed by a reaction with an epoxy compound having a carbon-carbon unsaturated bond, a reaction with a halogenated hydrocarbon compound having a carbon-carbon unsaturated bond, and introduction of a reactive silicon group into the carbon-carbon unsaturated group by a hydrosilylation reaction,

[4] the curable composition of any one of the above-mentioned [1] - [3], wherein a content ratio of the reactive silicon group-containing polyoxyalkylene-based polymer (A) and the reactive silicon group-containing (meth)acrylate-based polymer (B) ((A)/(B)) is 90/10 - 20/80 in a weight ratio, and

[5] a cured product obtained by curing the curable composition of any one of the above-mentioned [1] - 4. [Effect of the Invention]

According to the present invention, a curable composition which can afford a cured product having sufficiently high elongation and sufficiently high strength, and a cured product obtained by curing the curable composition can be obtained.

[Description of Embodiments]

The curable composition of the present invention comprises
reactive silicon group-containing polyoxyalkylene-based polymer (A) having more than 1.0 reactive silicon group on average at one terminal portion (hereinafter to be also abbreviated as "polyoxyalkylene-based polymer (A)" or "polymer (A)"), and
reactive silicon group-containing (meth)acrylate-based polymer (B) (hereinafter to be also abbreviated as "(meth)acrylate-based polymer (B)" or "polymer (B)").

In the present invention, the "reactive silicon group" means a silicon-containing group having a hydroxyl group or a hydrolyzable group bonded to a silicon atom and capable of forming a siloxane bond. In the present specification, "(meth)acryl" means both "acryl" and "methacryl".

<<Polyoxyalkylene-based polymer (A)>>

The polyoxyalkylene-based polymer (A) in the present invention has more than 1.0 reactive silicon group on average at one terminal.

In the present invention, having "more than 1.0 reactive silicon group on average at one terminal" means that an average number of the reactive silicon groups per one terminal portion of a polymer molecular chain (molecular chain constituting polymer) is more than 1.0. As used herein, the "terminal portion" includes the chain terminal of a polymer molecular chain and its vicinal structure. Specifically, it can be defined as a binding portion of atoms in the number corresponding to 20% (preferably 10%) from the terminal of the binding atoms constituting the polymer molecular chain. When expressed in the number of binding atoms, the terminal portion can be defined as up to 30 atoms, preferably 20

atoms, from the terminal of the polymer molecular chain.

When the number of the reactive silicon group at one terminal portion is more than 1.0 on average, one terminal portion may contain both a molecular chain having two or more reactive silicon groups, and a molecular chain having one reactive silicon group at one terminal portion, or a terminal portion having two or more reactive silicon groups at plural terminal portions of one molecular chain, and a terminal portion having one reactive silicon group. Furthermore, a molecular chain having two or more reactive silicon groups at one terminal portion and a molecular chain containing a terminal portion having no reactive silicon group may be contained.

<Reactive silicon group>

The polyoxyalkylene-based polymer (A) only needs to have more than 1.0, preferably not less than 1.1, more preferably not less than 1.5, further preferably not less than 1.7, reactive silicon groups on average at one terminal. The upper limit is preferably not more than 5, more preferably not more than 3. That is, in polyoxyalkylene-based polymer (A), the average number of the reactive silicon groups per one terminal portion of the polymer molecular chain only needs to be more than 1.0, preferably not less than 1.1, more preferably not less than 1.5, further preferably not less than 1.7. The upper limit is preferably not more than 5, more preferably not more than 3.

The number of the terminal portions having two or more reactive silicon groups, which is contained in one molecule of polyoxyalkylene-based polymer (A) is preferably not less than 0.5, more preferably not less than 1.0, further preferably 1.1 or more, most preferably not less than 1.5, on average. The upper limit is preferably not more than 4, more preferably not more than 3.

While polyoxyalkylene-based polymer (A) may have a reactive silicon group at a position besides the terminal portion, it preferably has a reactive silicon group only at the terminal portion, since a rubbery .cured product showing high elongation and low elastic modulus is easily obtained.

The terminal portion having two or more reactive silicon groups of polyoxyalkylene-based polymer (A) preferably has a structure represented by the formula (2):

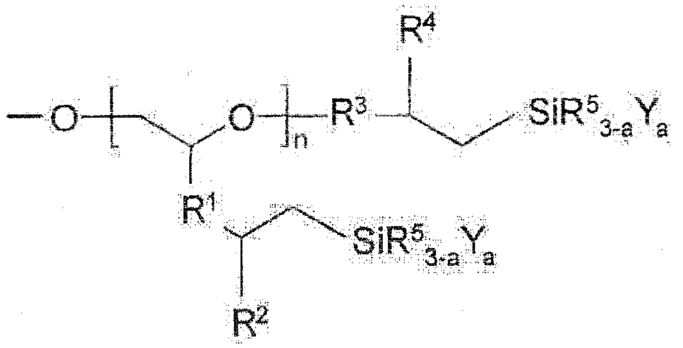

(2)

In the formula (2), $R^1$ is a divalent linking group having 1 - 6 carbon atoms, for example, $-CH_2-$, $-C_2H_4-$, $-C_3H_6-$, $-C_4H_8-$,$-C_5H_{10}-$, $-C_6H_{12}-$, $-C(CH_3)_2-$, $-CH_2-O-CH_2-$, $-CH_2-O-CH_2-O-CH_2$, -C=C-,-C≡C-, -CO-, -CO-O-, -CO-NH-, -CH=N-, -CH=N-N=CH- and the like. Preferred are $-CH_2OCH_2-$, $-CH_2O-$ or $-CH_2-$, and more preferred is $-CH_2OCH_2-$.
n is an integer of 1 to 10.

$R^3$ is a divalent linking group having 1 - 6 carbon atoms, for example, $-CH_2-$, $-C_2H_4-$, $-C_3H_6-$, $-C_4H_8-$, $-C_5H_{10}-$, $-C_6H_{12}-$,$-C(CH_3)_2-$, $-CH_2-O-CH_2-$, $-CH_2-O-CH_2-O-CH_2$, -C=C-, -C≡C-, -CO-,-CO-O-, -CO-NH-, -CH=N-, -CH=N-N=CH- or the like. Preferred are $-CH_2-$ and $-C_2H_4-$, and more preferred is $-CH_2-$.

$R^2$ and $R^4$ are each independently a hydrogen atom or a hydrocarbon group having 1 - 10 carbon atoms. As the hydrocarbon group having 1 - 10 carbon atoms, a linear or branched alkyl group having 1 - 10 carbon atoms is preferable and, as the linear alkyl group, methyl group, ethyl group, propyl group, butyl group, pentyl group, hexyl group, heptyl group, octyl group and the like can be mentioned and, as the branched alkyl group, isopropyl group, s-butyl group, t-butyl group, 2-methylbutyl group, 2-ethylbutyl group, 2-propylbutyl group, 3-methylbutyl group, 3-ethylbutyl group, 3-propylbutyl group, 2-methylpentyl group, 2-ethylpentyl group, 2-propylpentyl group, 3-methylpentyl group, 3-ethylpentyl group, 3-propylpentyl group, 4-methylpentyl group, 4-ethylpentyl group, 4-propylpentyl group, 2-methylhexyl group, 2-ethylhexyl group, 2-propylhexyl group, 3-methylhexyl group, 3-ethylhexyl group, 3-propylhexyl group, 4-methylhexyl group, 4-ethylhexyl group, 4-propylhexyl group, 5-methylhexyl group, 5-ethylhexyl group, 5-propylhexyl group and the like can be mentioned.

$R^2$ and $R^4$ are each preferably a hydrogen atom, a methyl group or an ethyl group, more preferably a hydrogen atom or a methyl group.

a is any of 1, 2 and 3, and each $R^5$ is independently a hydrocarbon group having 1 - 20 carbon atoms optionally having substituent(s) which is/are a hetero atom-containing group or a halogen atom. As the hydrocarbon group having 1 - 20 carbon atoms, a linear or branched alkyl group having 1 - 12 carbon atoms is preferable and, as the linear alkyl group, methyl group, ethyl group, propyl group, butyl group, pentyl group, hexyl group, heptyl group, octyl group and the like can be mentioned and, as the branched alkyl group, isopropyl group, s-butyl group, t-butyl group, 2-methylbutyl group, 2-ethylbutyl group, 2-propylbutyl group, 3-methylbutyl group, 3-ethylbutyl group, 3-propylbutyl group, 2-methylpentyl group, 2-ethylpentyl group, 2-propylpentyl group, 3-methylpentyl group, 3-ethylpentyl, group, 3-propylpentyl group, 4-methylpentyl group, 4-ethylpentyl group, 4-propylpentyl group, 2-methylhexyl group, 2-ethylhexyl group, 2-propylhexyl group, 3-methylhexyl group, 3-ethylhexyl group, 3-propylhexyl group, 4-methylhexyl group, 4-ethylhexyl group, 4-propylhexyl group, 5-methylhexyl group, 5-ethylhexyl group, 5-propylhexyl group and the like can be mentioned. As the hetero atom-containing group, oxygen-containing groups such as methoxy group, ethoxy group, phenoxy group, furyl group and the like; nitrogen-containing groups such as N,N-dimethylamino group, N-phenylamino group, N,N-dimethylaminomethyl group, N,N-dimethylaminoethyl group, N,N-diethylaminomethyl group and the like; sulfur-containing groups such as thienyl group and the like, and the like can be mentioned. As the halogen atom, fluorine atom, chlorine atom, bromine atom and iodine atom can be mentioned.

$R^5$ is preferably a methyl group, an ethyl group, a chloromethyl group, a methoxymethyl group and an N,N-diethylaminomethyl group, more preferably a methyl group, an ethyl group, a chloromethyl group or a methoxymethyl group, particularly preferably a methyl group or an ethyl group.

Y is a hydroxyl group or a hydrolyzable group.

The hydrolyzable group means a group which is hydrolyzed in the co-presence of, for example, a catalyst and water to form a silanol group, and can form a siloxane condensate. Examples of the include hydrogen atom, halogen, alkoxy group, acyloxy group, ketoxymate group, amino group, amido group, acid amido group, aminooxy group, mercapto group, alkenyloxy group and the like. Of these, alkoxy groups such as methoxy group, ethoxy group and the like are preferable, and methoxy group and ethoxy group are particularly preferable, since they have mild hydrolyzability and are easy to handle.

Specific preferable examples of the reactive silicon group ($-SiR^5_{3-a}Y_a$) of polyoxyalkylene-based polymer (A) include, but are not limited to, trimethoxysilyl group, triethoxysilyl group, tris(2-propenyloxy)silyl group, triacetoxysilyl group, dimethoxymethylsilyl group, diethoxymethylsilyl group, dimethoxyethylsilyl group, (chlcromethyl)dimethoxysilyl group, (chloromethyl)diethoxysilyl group, (methoxymethyl)dimethoxysilyl group, (methoxymethyl)diethoxysilyl group, (N,N-diethylamincmethyl)dimethoxysilyl group, (N,N-diethylaminomethyl)diethoxysilyl group and the like. Of these, methyldimethoxysilyl group, trimethoxysilyl group, triethoxysilyl group, (chloromethyl)dimethoxysilyl group, (methoxymethyl)dimethoxysilyl group, (methoxymethyl)diethoxysilyl group and (N,N-diethylaminomethyl)dimethoxysilyl group are preferable since they have high activity and afford cured products having good mechanical property, and trimethoxysilyl group, (chloromethyl)dimethoxysilyl group and (methomethyl)dimethoxysilyl group are particularly preferable. From the aspect of stability, methyldimethoxysilyl group, methyldiethoxysilyl group and triethoxysilyl group are preferable, and methyldiethoxysilyl group and triethoxysilyl group are particularly preferable. In addition, trimethoxysilyl group, triethoxysilyl group and dimethoxymethylsilyl group are preferable since production is easy.

<Main chain structure>

The main chain skeleton of polyoxyalkylene-based polymer (A) is not particularly limited and, for example, polyoxyethylene, polyoxypropylene, polyoxybutylene, polyoxytetramethylene, polyoxyethylene-polyoxypropylene copolymer, polyoxypropylene-polyoxybutylene copolymer and the like can be mentioned. Of these, polyoxypropylene is preferable.

The number average molecular weight of polyoxyalkylene-based polymer (A) is preferably 3,000 - 100,000, more preferably 3,000 - 50,000, particularly preferably 3,000 - 30,000, based on polystyrene molecular weight by gel permeation chromatography (GPC). When the number average molecular weight is less than 3,000, the amount of the reactive silicon group introduced per weight of polyoxyalkylene-based polymer (A) increases, which may be inconvenient in terms of production cost, and when it exceeds 100,000, it tends to cause disadvantages in terms of workability due to high viscosity.

The molecular weight of polyoxyalkylene-based polymer (A) can also be shown by a terminal group-based molecular weight, which is obtained by directly measuring the terminal group concentration of an organic polymer precursor before introduction of a reactive silicon group by a method of measuring hydroxyl value according to JIS K 1557 and titration analysis based on the principle of the measurement method of iodine value as defined in JIS K 0070, and determining in consideration of the structure of the organic polymer (degree of branching as determined by the polymerization initiator used). The terminal group-based molecular weight of polyoxyalkylene-based polymer (A) can also be obtained by forming a calibration curve of the number average molecular weight determined by general GPC measurement of organic polymer precursor and the above-mentioned terminal group-based molecular weight, and

converting the number average molecular weight of polyoxyalkylene polymer (A) determined by GPC to a terminal group-based molecular weight.

While the molecular weight distribution (Mw/Mn) of polyoxyalkylene-based polymer (A) is not particularly limited, it is preferably less than 2.0, more preferably not more than 1.6, further preferably not more than 1.5, particularly preferably not more than 1.4, and most preferably not more than 1.3. The molecular weight distribution of the polyoxyalkylene-based polymer (A) can be obtained from the number average molecular weight (Mn) and the weight average molecular weight (Mw) obtained by GPC measurement.

Moreover, since polyoxyalkylene-based polymer (A) of the present invention is characterized by localization of a reactive group at a terminal portion, the main chain structure is preferably linear.

<Synthesis method of polyoxyalkylene-based polymer (A)>

Polyoxyalkylene-based polymer (A) is preferably obtained by introducing two or more carbon-carbon unsaturated bonds into one terminal of a hydroxyl group-terminal polymer and then reacting same with a reactive silicon group-containing compound which reacts with the carbon-carbon unsaturated bonds.

<Polymerization method of hydroxyl group terminal polymer>

As a polymerization method of the hydroxyl group-terminal polymer which is a precursor of polyoxyalkylene-based polymer (A), a method including polymerizing an epoxy compound with an initiator having a hydroxyl group by using a double-metal cyanide complex catalyst such as a zinc hexacyanocobaltate glyme complex or the like is preferable.

Examples of the initiator having a hydroxyl group include those having one or more hydroxyl groups, such as ethylene glycol, propylene glycol, glycerol, pentaerythritol, low molecular weight polypropylene glycol, polyoxypropylene triol, allyl alcohol, polypropylene monoallyl ether, polypropylene monoalkyl ether and the like.

Examples of the epoxy compound include alkylene oxides such as ethylene oxide, propylene oxide and the like, glycidyl ethers such as methyl glycidyl ether, allyl glycidyl ether and the like, and the like. Of these, propylene oxide is preferable.

<Introduction method of carbon-carbon unsaturated bond into polymer terminal>

As a method of introducing two or more carbon-carbon unsaturated bonds into one terminal, a method including allowing an action of an alkali metal salt on a terminal hydroxyl group-containing polymer, and first performing a reaction with an epoxy compound having a carbon-carbon unsaturated bond, and then a reaction with a halogenated hydrocarbon compound having a carbon-carbon unsaturated bond is preferably used. By using this method, introduction of a reactive group can be performed more efficiently and stably while controlling the molecular weight and molecular weight distribution of the polymer main chain according to the polymerization conditions.

In the present invention, an alkali metal salt is used for reacting an epoxy compound having a carbon-carbon unsaturated bond with the terminal hydroxyl group-containing polymer. By using an alkali metal salt, an epoxy compound having a carbon-carbon unsaturated bond can be uniformly reacted with a terminal portion of all polymers. When, for example, a double-metal cyanide complex catalyst is used instead of an alkali metal salt, an epoxy compound having a carbon-carbon unsaturated bond selectively reacts with a polymer having a small molecular weight. As a result, a carbon-carbon unsaturated bond is locally introduced into the terminal portion of some polymers, which is not preferable.

Examples of the alkali metal salt to be used in the present invention include sodium hydroxide, sodium alkoxide, potassium hydroxide, potassium alkoxide, lithium hydroxide, lithium alkoxide, cesium hydroxide, cesium alkoxide and the like. In view of easy handling and solubility in solvents, sodium hydroxide, sodium methoxide, sodium ethoxide, potassium hydroxide, potassium methoxide and potassium ethoxide are preferable, and sodium methoxide and potassium methoxide are more preferable. In view of availability, sodium methoxide is particularly preferable. The alkali metal salt may be used after dissolution in a solvent (e.g., methanol, ethanol etc.).

The amount of an alkali metal salt to be added in the present invention is preferably such an amount that makes the molar ratio to the hydroxyl group of the polymer not less than 0.5, more preferably not less than 0.6 or more, further preferably not less than 0.7, and particularly preferably not less than 0.8. Moreover, an amount that makes the molar ratio not more than 1.2 is preferable, more preferably not more than 1.0. When the amount of the alkali metal salt to be added is too small, the reaction does not proceed sufficiently, and when the amount to be added is too high, the alkali metal salt remains as impurity and may cause progress of a side reaction.

The alkali metal salt is used for alkoxylating the hydroxyl group in the polyoxyalkylene-based polymer. To efficiently carry out this reaction, water and an alcohol component other than a hydroxyl group-containing polymer is preferably removed from the reaction system. To remove them, a known method can be utilized and, for example, heating evaporation, evaporation under reduced pressure, spray vaporization, thin film evaporation, azeotropic distillation with

evaporation and the like can be utilized.

As the temperature of the action of the alkali metal salt, not less than 50°C and not more than 150°C is preferable, and not less than 110°C and not more than 140°C is more preferable. As the duration of the action of the alkali metal salt, not less than 10 min and not more than 5 hr is preferable, and not less than 30 min and not more than 3 hr is more preferable.

As the epoxy compound having a carbon-carbon unsaturated bond to be used in the present invention, a compound represented by the formula (3):

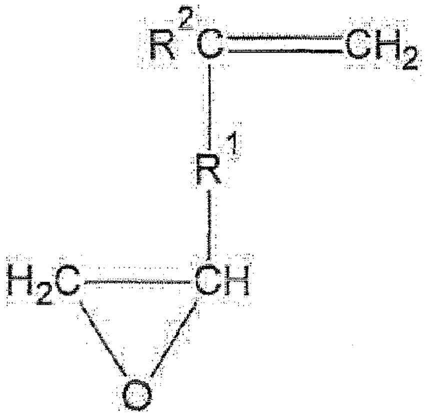

(3)

wherein $R^1$ and $R^2$ are as defined above.
can be used particularly preferably. Specifically, for example, allyl glycidyl ether, methallyl glycidyl ether, glycidyl acrylate, glycidyl methacrylate, butadiene monooxide, and 1,4-cyclopentadiene monoepoxide are preferable from the aspect of reaction activity, and allyl glycidyl ether is particularly preferable.

As the amount of the epoxy compound having a carbon-carbon unsaturated bond to be used in the present invention, any amount can be used in consideration of the amount and reactivity of the carbon-carbon unsaturated bond to be introduced into the polymer. Particularly, the molar ratio to the hydroxyl group contained in the polymer is preferably not less than 0.2, more preferably not less than 0.5. It is preferably not more than 5.0, more preferably not more than 2.0.

In the present invention, the reaction temperature of the reaction of a polymer containing a hydroxyl group and an epoxy compound having a carbon-carbon unsaturated bond is preferably not less than 60°C and not more than 150°C, more preferably not less than 110°C and not more than 140°C. When it is low, the reaction scarcely proceeds, and when it is too high, the main chain of the polyoxyalkylene-based polymer may be decomposed. As the reaction time, not less than 10 min and not more than 5 hr is preferable, and not less than 30 min and not more than 3 hr is more preferable.

Examples of the halogenated hydrocarbon compound having a carbon-carbon unsaturated bond to be used in the present invention include vinyl chloride, allyl chloride, methallyl chloride, vinyl bromide, allyl bromide, methallyl bromide, vinyl iodide, allyl iodide, methallyl iodide and the like. It is more preferable to use allyl chloride and methallyl chloride since they are easy to handle.

While the amount of the above-mentioned halogenated hydrocarbon compound having a carbon-carbon unsaturated bond to be added is not particularly limited, the lower limit of the molar ratio relative to the hydroxyl group contained in the polyoxyalkylene-based polymer is preferably not less than 0.7, more preferably not less than 1.0. The upper limit is preferably not more than 5.0, more preferably not more than 2.0.

As the temperature at which the halogenated hydrocarbon compound having a carbon-carbon unsaturated bond is reacted, not less than 50°C and not more than 150°C is preferable, and not less than 110°C and not more than 140°C is more preferable. As the reaction time, not less than 10 min and not more than 5 hr is preferable, and not less than 30 min and not more than 3 hr is more preferable.

The number of hydroxyl group contained in one molecule of the polymer having a carbon-carbon unsaturated bond, which is obtained after the above-mentioned reaction is preferably not more than 0.3, more preferably not more than 0.1, to maintain sufficient stability even after long-term storage.

<Introduction method of reactive silicon group into polymer terminal>

The introduction method of a reactive silicon group is not particularly limited, and a known method can be utilized. The following introduction method is shown as an example.

(i) A method of adding a hydrosilane compound to a polymer having a carbon-carbon unsaturated bond by a

hydrosilylation reaction.

(ii) A method of reacting a polymer having a carbon-carbon unsaturated bond, with a compound having both a group capable of forming a bond by reacting with a carbon-carbon unsaturated bond and a reactive silicon group (also called a silane coupling agent). Examples of the silane coupling agent that forms a bond by reacting with a carbon-carbon unsaturated bond include, but are not limited to, a mercapto group and the like.

The method (i) is preferable because the reaction is simple and adjustment of the amount of the reactive silicon group to be introduced and the physical properties of the resulting reactive silicon group-containing polyoxyalkylene-based polymer (A) are stable. The method (ii) is preferable because it has many choices of reaction and can easily increase the introduction rate of the reactive silicon group.

Examples of a part of the hydrosilane compound to be used in method (i) are shown below: halogenated silanes such as trichlorosilane, dichloromethylsilane, chlorodimethylsilane, dichlorophenylsilane, (chloromethyl)dichlorosilane, (dichloromethyl)dichlorosilane, bis(chloromethyl)chlorosilane, (methoxymethyl)dichlorosilane and the like; alkoxysilanes such as trimethoxysilane, triethoxysilane, dimethoxymethylsilane, diethoxymethylsilane, dimethoxyphenylsilane, ethyldimethoxysilane, methoxydimethylsilane, ethoxydimethylsilane, (chloromethyl)methylmethoxysilane, (chloromethyl)dimethoxysilane, (chloromethyl)diethoxysilane, bis(chloromethyl)methoxysilane, (methoxymethyl)methylmethoxysilane, (methoxymethyl)dimethoxysilane, (methoxymethyl)diethoxysilane, (ethoxymethyl)diethoxysilane, (3,3,3-trifluoropropyl)dimethoxysilane, (N,N-diethylaminomethyl)dimethoxysilane, N,N-diethylaminomethyl)diethoxysilane, [(chloromethyl)dimethoxysilyloxy]dimethylsilane, [(chloromethyl)diethoxysilyloxy]dimethylsilane, [(methoxymethyl)dimethoxysilyloxy]dimethylsilane, [(diethylaminomethyl)dimethoxysilyloxy]dimethylsilane, [(3,3,3-trifluoropropyl)dimethoxysilyloxy]dimethylsilane and the like; acyloxysilanes such as diacetoxymethylsilane, diacetoxyphenylsilane and the like; ketoxymate silanes such as bis(dimethylketoxymate)methylsilane, bis(cyclohexylketoxymate)methylsilane and the like, isopropenyloxysilanes (deacetonated type) such as triisopropenyloxysilane, (chloromethyl)diisopropenyloxysilane, (methoxymethyl)diisopropenyloxysilane and the like, and the like.

As the amount of hydrosilane to be used, its molar ratio relative to an unsaturated group in a precursor polymer (number of moles of hydrosilane/number of moles of unsaturated group) is preferably 0.05 - 10 from the aspect of reactivity, and more preferably 0.3 - 2 from the aspect of economic efficiency.

The hydrosilylation reaction is accelerated by various catalysts. As the hydrosilylation catalyst, known catalysts such as various complexes of cobalt, nickel, iridium, platinum, palladium, rhodium, ruthenium and the like can be used. For example, carriers such as alumina, silica, carbon black and the like, which support a platinum catalyst, can be mentioned. As the platinum catalyst, chloroplatinic acid; chloroplatinic acid complexes composed of chloroplatinic acid, alcohol, aldehyde, ketone etc.; platinum-olefin complexes [e.g., $Pt(CH_2{=}CH_2)_2(PPh_3)$, $Pt(CH_2{=}CK_2)_2Cl_2$]; platinum-vinylsiloxane complexes [$Pt\{(vinyl)Me_2SiOSiMe_2(vinyl)\}$, $Pt\{Me(vinyl)SiO\}_4$]; platinum-phosphine complexes [$Ph(PPh_3)_4$, $Pt(PBu_3)_4$]; platinum-phosphite complexes [$Pt\{P(OPh)_3\}_4$] and the like can be used. From the aspect of reaction efficiency, platinum catalysts such as chloroplatinic acid, platinum vinylsiloxane complexes and the like are preferably used. While the temperature condition of the silylation reaction is not particularly limited, reaction under heating conditions is preferable since the viscosity of the reaction system can be lowered and the reactive can be improved. The reaction temperature within the range of 50°C - 150°C is more preferable, and 70°C - 120°C is particularly preferable. While the reaction time is influenced by the main chain structure and the like of the polymer to be produced, the reaction is preferably completed within not less than 30 min to 5 hr, more preferably within 3 hr, from the aspect of efficient production steps.

Since polyoxyalkylene-based polymer (A) has a high content of reactive silicon groups, a hydrolysis condensation reaction of the reactive silicon group simultaneously proceeds during hydrosilylation, and the molecular weight may increase, and viscosity may increase during long-term preservation.

In the production method of polyoxyalkylene-based polymer (A) by hydrosilylation, therefore, trialkyl orthocarboxylate is used to improve thickening during silylation and storage stability.

Specific examples of the trialkyl orthocarboxylate include trimethyl orthoformate, triethyl orthoformate, trimethyl orthoacetate, triethyl orthoacetate and the like. Trimethyl orthoformate and trimethyl orthoacetate are more preferable.

The amount of trialkyl orthocarboxylate to be used is 0.1 to 10 parts by weight, preferably 0.1 to 3 parts by weight, relative to 100 parts by weight of a polymer having a carbon-carbon double bond. When the amount of use is small, a sufficient effect is not obtained, and the viscosity of polyoxyalkylene-based polymer (A) may increase. When the amount of use is too high, it is economically disadvantageous, and the quantity of work of the step for removing orthoester increases

<<(Meth)acrylate-based polymer (B)>>

The (meth)acrylate-based polymer (B) of the present invention has a particular reactive silicon group represented by the formula (1) described later.

In (meth)acrylate-based polymer (B), the main monomer unit constituting the main chain is composed of a

(meth)acrylate monomer. While such (meth)acrylate monomer is not particularly limited, various ones can be used. Specific examples include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth) acrylate, cyclohexyl (meth) acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 3-(dimethoxymethylsilyl)propyl (meth)acrylate (aka: γ-(meth)acryloxypropyldimethoxymethylsilane), 2-(dimethoxymethylsilyl)ethyl (meth)acrylate, 2-(dimethoxymethylsilyl)methyl (meth)acrylate, 2-(diethoxymethylsilyl)methyl (meth)acrylate, 3-((methoxymethyl)dimethoxysilyl)propyl (meth)acrylate, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate and the like. One or more kinds of these can be used. The content of the (meth)acrylate monomer unit relative to (meth)acrylate-based polymer (B) as a whole is preferably not less than 50 wt%, more preferably not less than 70 wt%.

The monomer unit constituting the main chain may contain a unit composed of a monomer containing a (meth)acryloyl group other than the above-mentioned (meth)acrylate monomer. Examples of such monomer include (meth)acrylic acid; amido group-containing monomers such as N-methylolacrylamide, N-methylolmethacrylamide and the like, epoxy group-containing monomers such as glycidyl acrylate, glycidyl methacrylate and the like, monomers containing a nitrogen-containing group such as diethylaminoethyl acrylate, diethylaminoethyl methacrylate and the like, and the like. One or more kinds of these can be used.

The monomer unit constituting the main chain may contain a unit composed of a monomer free of a (meth)acryloyl group (i.e., monomer free of both acryloyl group and methacryloyl group), and examples of such monomer include a vinyl monomer copolymerizable with the above-mentioned (meth)acrylate monomer. Such vinyl monomer is not particularly limited and, for example, styrene monomers such as styrene, vinyltoluene, α-methylstyrene, chlorostyrene, styrene sulfonic acid and a salt thereof and the like; fluorine-containing vinyl monomers such as p-fluoroethylene, perfluoropropylene, vinylidene fluoride and the like; silicon-containing vinyl monomers such as vinyltrimethoxysilane, vinyltriethoxysilane and the like; maleic anhydride, maleic acid, monoalkylester and dialkylester of maleic acid; fumaric acid, monoalkylester and dialkylester of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide and the like; nitrile group-containing vinyl monomers such as acrylonitrile, methacrylonitrile and the like; (meth)acrylamide; vinyl ester monomers such as vinyl acetate, vinyl propionate, vinyl pivalate, vinyl benzoate, vinyl cinnamate and the like; alkenyl monomers such as ethylene, propylene and the like; conjugated diene monomers such as butadiene, isoprene and the like; vinyl chloride; vinylidene chloride; allyl chloride; allyl alcohol and the like can be mentioned. One or more kinds of these can be used.

The (meth)acrylate-based polymer (B) is preferably (i) a polymer in which the monomer unit constituting the main chain is composed of a styrene monomer and a (meth)acrylate monomer, (ii) a polymer in which the monomer unit constituting the main chain is composed of an acrylate monomer and a methacrylate monomer, or (iii) a polymer in which the monomer unit constituting the main chain is composed of an acrylate monomer, more preferably (ii) or (iii), particularly preferably (iii).

The (meth)acrylate-based polymer (B) has a reactive silicon group represented by the following formula (1) (hereinafter to be also referred to as "reactive silicon group of the formula (1)").

$$-SiRX_2 \qquad (1)$$

In the formula (1), R is as defined for $R^5$ in the aforementioned formula (2) and is a hydrocarbon group having 1 - 20 carbon atoms and optionally having substituent(s) which is/are a hetero atom-containing group or a halogen atom, preferably methyl group, ethyl group, chloromethyl group, methoxymethyl group, or N,N-diethylaminomethyl group, more preferably methyl group, ethyl group, chloromethyl group, or methoxymethyl group, particularly preferably methyl group or ethyl group.

X is as defined for Y in the aforementioned formula (2) and is a hydroxyl group or a hydrolyzable group. Examples of the hydrolyzable group include hydrogen atom, halogen, alkoxy group, acyloxy group, ketoxymate group, amino group, amido group, acid amido group, aminooxy group, mercapto group, alkenyloxy group and the like. The hydrolyzable group is preferably alkoxy group such as methoxy group, ethoxy group or the like, particularly preferably methoxy group or ethoxy group, since they have mild hydrolyzability and are easy to handle.

The (meth)acrylate-based polymer (B) has a reactive silicon group of the formula (1) which is a reactive silicon group wherein two hydroxyl groups or hydrolyzable groups bind to the silicon atom. Therefore, by using (meth)acrylate-based polymer (B), a curable composition that affords a cured product by curing, which product showing improved elongation and improved strength, can be realized, as compared to a curable composition using a reactive silicon group-containing (meth)acrylate-based polymer having a silicon group wherein three X (hydroxyl group or hydrolyzable group) bind to the silicon atom.

The number of the reactive silicon group of the formula (1) of (meth)acrylate-based polymer (B) is not less than 1.6 on average per one molecule (that is, the average number of the reactive silicon groups per one molecule is not less than 1.0). From the aspect of strength after curing, 1.2 or more is preferable, not less than 1.6 is more preferable, not less than 2.0 is further preferable. From the aspect of stability of the polymer, the number of the reactive silicon group on average per one molecule is preferably not more than 5.0, more preferably not more than 3.0 (i.e., the average number of the reactive silicon groups per one molecule is preferably not more than 5.0, more preferably not mere than 3.0).

The production method of (meth)acrylate-based polymer (B) is not particularly limited. As a method of producing a (meth)acrylate-based polymer for the production of (meth)acrylate-based polymer (B) (polymerization method), a known method can be used and, for example, a general free radical polymerization method using an azo compound, a peroxide or the like as a polymerization initiator can be mentioned. In a free radical polymerization method, specifically, a polymerization initiator, a chain transfer agent, a solvent and the like are added and a polymerization reaction is performed.

Examples of the polymerization initiator include azo compounds such as 2,2'-azobis(2-methylbutyronitrile), dimethyl 2,2'-azobis(2-methylpropionate), 2,2'-azobis(2,4-dimethylvaleronitrile), 2,2'-azobis(4-methoxy-2,4-dimethylvaleronitrile), 2,2'-azobis[N-(2-propenyl)-2-methylpropionamide], 1,1'-azobis(cyclohexane-1-carbonitrile) and the like; diacyl peroxides such as benzoyl peroxide, isobutyryl peroxide, isononanoyl peroxide, decanoyl peroxide, lauroyl peroxide, parachlorobenzoyl peroxide, di(3,5,5-trimethylhexanoyl) peroxide and the like; peroxydicarbonates such as diisopropyl perdicarbonate, di-sec-butyl perdicarbonate, di-2-ethylhexyl perdicarbonate, di-1-methylheptyl perdicarbonate, di-3-methoxybutyl perdicarbonate, dicyclohexyl perdicarbonate and the like; peroxyesters such as tert-butyl perbenzoate, tert-butyl peracetate, tert-butyl per-2-ethylhexanoate, tert-butyl perisobutyrate, tert-butyl perpivalate, tert-butyl diperadipate, cumyl perneodecanoate and the like; ketone peroxides such as methyl ethyl ketone peroxide, cyclohexanone peroxide and the like; dialkyl peroxides such as di-tert-butyl peroxide, dicumyl peroxide, tert-butyl cumyl peroxide, 1,1-di(tert-hexyl peroxy)-3,3,5-trimethylcyclohexane and the like; hydroperoxides such as cumene hydroxyperoxide, tert-butyl hydroperoxide and the like; peroxides such as 1,1-di(tert-hexylperoxy)-3,3,5-trimethylcyclohexane and the like, and the like. Only one kind of these polymerization initiators may be used, or two or more kinds thereof may be used.

Examples of the chain transfer agent include mercapto group-containing compounds such as n-dodecyl mercaptan, tert-dodecyl mercaptan, lauryl mercaptan and the like. One kind of these may be used, or two or more kinds thereof may be used.

Examples of the solvent include aromatic compounds such as toluene, xylene, styrene, ethylbenzene, paradichlorobenzene, di-2-ethylhexyl phthalate, di-n-butyl phthalate and the like; hydrocarbon compounds such as hexane, heptane, octane, cyclohexane, methylcyclohexane and the like; carboxylate compounds such as butyl acetate, n-propyl acetate, isopropyl acetate and the like; ketone compounds such as methyl isobutyl ketone, methyl ethyl ketone and the like; dialkyl carbonate compounds such as dimethyl carbonate, diethyl carbonate and the like; alcohol compounds such as 1-propanol, 2-propanol, 1-butanol, 2-butanol, isobutyl alcohol, tert-butyl alcohol, amyl alcohol and the like, and the like. Of these, one or more kinds selected from the dialkyl carbonate compounds and the alcohol compounds are preferable in view of odor, environmental burden and the like. Dimethyl carbonate, 1-propanol, 2-propanol, 1-butanol, 2-butanol, isobutyl alcohol, tert-butyl alcohol are more preferable, 2-propanol and isobutyl alcohol are preferable, since boiling point and emission of all volatile organic compounds from the composition by the measurement method described in GEV Specification and Classification Criteria, February 14, 2001 version prescribed by GEV (Gemeinschaft Emissicnskontrollierte Verlegewerkstoffe, e.V.) can be suppressed.

The method for introducing the reactive silicon group of the formula (1) into the (meth)acrylate-based polymer is not particularly limited and, for example, the following method can be used.

Method (I) : A method of copolymerizing a monomer having a reactive silicon group of the formula (1) and a monomer having no reactive silicon group. With this method, the reactive silicon group of the formula (1) tends to be randomly introduced into the main chain of the polymer. Examples of the monomer having a reactive silicon group of the formula (1) include (meth)acrylate monomers having a reactive silicon group such as 3-(dimethoxymethylsilyl)propyl (meth)acrylate, (dimethoxymethylsilyl)methyl (meth)acrylate, (diethoxymethylsilyl)methyl (meth)acrylate, 3-((methoxymethyl)dimethoxysilyl)propyl (meth)acrylate and the like. Of these, from the aspect of availability, 3-(dimethoxymethylsilyl)propyl (meth)acrylate is preferable, and 3-(dimethoxymethylsilyl)propyl methacrylate is more preferable. In addition, the monomer having a reactive silicon group of the formula (1) may not be a (meth)acrylate monomer and, for example, vinylmethyldimethoxysilane, vinylmethyldiethoxysilane and the like can be mentioned.

Method (II) : A polymerization reaction for producing a (meth)acrylate-based polymer is carried out using a mercaptosilane compound having a reactive silicon group of the formula (1) as a chain transfer agent. Using this method, the reactive silicon group of the formula (1) can be introduced into the terminal of the polymer. Examples of the mercaptosilane compound having a reactive silicon group of the formula (1) include 3-mercaptopropyl (dimethoxy)methylsilane (aka: γ-mercaptopropyldimethoxy(methyl)silane), 3-mercaptomethyl(dimethoxy)methylsilane and the like.

Method (III) : A method including obtaining a (meth)acrylate-based polymer containing a unit of a monomer having a reactive functional group (hereinafter to be also referred to as "V group") and reacting same with a compound having a functional group reactive with the V group and a reactive silicon group. Specific examples include a method wherein a (meth)acrylate-based polymer containing a 2-hydroxyethyl (meth)acrylate unit is synthesized, and a hydroxy group of the unit is reacted with an isocyanate silane having a reactive silicon group of the formula (1), a method wherein a (meth)acrylate-based polymer containing a glycidyl acrylate unit is synthesized, and an epoxy group of the unit is reacted with an aminosilane compound having a reactive silicon group of the formula (1), and the like.

Examples of the compound having a functional group reactive with V group and a reactive silicon group include isocyanate silane compounds such as 3-isocyanate propyldimethoxymethylsilane, isocyanate methyldimethoxymethylsilane, isocyanate methyldiethoxymethylsilane and the like; epoxy silane compounds such as 3-glycidoxypropyldimethoxymethylsilane, glycidoxymethyldimethoxymethylsilane, glycidoxymethyldiethoxymethylsilane and the like; aminosilane compounds such as 3-aminopropyldimethoxymethylsilane, aminomethyldimethoxymethylsilane, N-cyclohexylaminomethyldiethoxymethylsilane and the like, and the like.

Method (IV) : A method including modifying the terminal functional group of a (meth)acrylate-based polymer synthesized by a living radical polymerization method to introduce a reactive silicon group. A (meth)acrylate-based polymer obtained by the living radical polymerization method permits easy introduction of a functional group into the polymer terminal, and a reactive silicon group can be introduced into the terminal of the polymer by modifying same. In this method, any modification reaction can be utilized. For example, a method using a compound having a functional group capable of reacting with a terminal reactive group obtained by polymerization and a silicon group, a method including introducing a double bond into the terminal of a polymer by using a compound having a functional group capable of reacting with a terminal reactive group and a double bond, and introducing a reactive silicon group thereinto by hydrosilylation, and the like can be used.

Examples of the "living radical polymerization method" include one using a cobalt porphyrin complex as shown in Journal of the American Chemical Society (J. Am. Chem. Soc.), 1994, vol. 16, p. 7943, one using nitrooxide radical as shown in JP-A-2003-500378, atom transfer radical polymerization (ATRP method) using an organic halide, a halogenated sulfonyl compound or the like as an initiator, and a transition metal complex as a catalyst, as shown in JP-A-11-130931, and the like.

The above-mentioned methods may be combined as desired. For example, when method (I) and method (II) are combined, (meth)acrylate-based polymer (B) having a reactive silicon group of the formula (1) at both terminal portion and/or side chain of a molecular chain (i.e., part other than the terminal portion of molecular chain) can be obtained.

In the curable composition of the present invention, (meth)acrylate-based polymer (B) as defined in the present claims is used.

In the curable composition of the present invention, a curable composition having low viscosity and a cured product having a high tensile strength are desired, polymer (B) comprises not less than 40 wt%, more preferably not less than 50 wt%, further preferably not less than 60 wt% of a monomer (b2) unit having a glass transition point (Tg) of homopolymer of not more than 80°C, and free of reactive silicon group in the whole constitutional units. As used herein, the "glass transition point (Tg) of homopolymer" means the glass transition point of the homopolymer of monomer (b2), and the numerical value thereof used is the glass transition point of a homopolymer as described in POLYMER HANDBOOK - FOURTH EDITION - (J. Brandrup et al.). Only one kind of such monomer (b2) may be used, or two or more kinds thereof may be used.

Of (meth)acrylate-based polymer (B), a polymer containing not less than 40 wt% of the monomer (b2) unit having a glass transition point (Tg) of homopolymer of not more than 80°C, and free of reactive silicon group in the whole constitutional units is to be referred to as "polymer (B2)".

In polymer (B2), while the upper limit of the amount of the monomer (b2) unit in the whole constitutional units (total monomer units constituting polymer (B2)) is not particularly limited, it is preferably not more than 90 wt%, more preferably not more than 80 wt%.

Examples of monomer (b2) include alkyl (meth)acrylates such as methyl acrylate, ethyl (meth)acrylate, n-propyl (meth)acrylate, isopropyl (meth)acrylate, n-butyl (meth)acrylate, isobutyl (meth)acrylate, s-butyl (meth)acrylate, tert-butyl acrylate, neopentyl (meth)acrylate, n-hexyl (meth)acrylate, n-heptyl (meth)acrylate, n-octyl (meth)acrylate, 2-ethylhexyl (meth)acrylate, n-nonyl (meth)acrylate, decyl (meth)acrylate, undecyl (meth)acrylate, lauryl (meth)acrylate, tridecyl (meth)acrylate, tetradecyl (meth)acrylate, hexadecyl (meth)acrylate, stearyl (meth)acrylate, behenyl (meth)acrylate, cyclohexyl (meth)acrylate and the like; 2-methoxyethyl (meth)acrylate, 3-methoxybutyl (meth)acrylate and the like. One or more kinds of these can be used.

To lower the viscosity of the curable composition, the glass transition point of the homopolymer of monomer (b2) is preferably -100°C - 80°C, more preferably -100°C - 70°C, further preferably -100°C - 60°C, particularly preferably -100°C - 20°C. As monomer (b2), alkyl (meth)acrylate, wherein the alkyl has 2 - 6 carbon atoms, is more preferably

used. As used herein, the carbon number of alkyl in alkyl (meth)acrylate means that of alkyl group (R) in the alkoxycarbonyl group (RO-CO-).

The polymer (B2) can contain a monomer unit having a glass transition point (Tg) of homopolymer of more than 80°C, and free of a reactive silicon group. Such monomer having a glass transition point (Tg) of homopolymer of more than 80°C, and free of a reactive silicon group is preferably one having a glass transition point (Tg) of homopolymer of not less than 105°C. Of polymer (B2), the monomer unit having a glass transition point (Tg) of homopolymer of more than 80°C, and free of reactive silicon group is preferably contained in a proportion of 30 - 5 wt% in the whole constitutional units.

When polymer (B) is polymer (B1), the number average molecular weight thereof is not less than 4,000 by GPC (based on polystyrene).

When polymer (B) is polymer (B2), the number average molecular weight thereof is preferably not less than 4,000, more preferably not less than 5,000, and preferably not more than 100,000, more preferably not more than 50,000, further preferably not more than 30,000, particularly preferably less than 20,000 by GPC (based on polystyrene).

<<Curable composition>>

The curable composition of the present invention comprises polyoxyalkylene-based polymer (A) and (meth)acrylate-based polymer (B). As a method of blending (meth)acrylate-based polymer (B) and polyoxyalkylene-based polymer (A), for example, the methods disclosed in JP-A-59-122541, JP-A-63-112642, JP-A-6-172631, JP-A-11-116763 and the like are used. Besides these, a method including polymerization of a (meth)acrylate monomer in the presence of a polyoxypropylene-based polymer having a reactive silicon group can be utilized. This method is specifically disclosed in JP-A-59-78223, JP-A-60-228516, JP-A-60-228517 and the like.

While the content ratio of polyoxyalkylene-based polymer (A) and (meth)acrylate-based polymer (B) in the curable composition ((A)/(B)) is not particularly limited, a weight ratio of 90/10 - 20/80 is preferable, 90/10 - 30/70 is more preferable, and 70/30 - 50/50 is particularly preferable. A weight ratio of (meth)acrylate-based polymer (B) of less than 10% is not preferable, because the improving effect of strength and elongation is difficult to be expressed, and 80% or more is not preferable, because elongation decreases.

<<Other polymers>>

As long as the effect of the present invention is not impaired, the composition of the present invention may contain, besides polyoxyalkylene-based polymer (A) and (meth)acrylate-based polymer (B), reactive silicon group-containing polyoxyalkylene-based polymer (C) having not less than 0.1 and not more than 1.0 reactive silicon group on average at one terminal (hereinafter to be also referred to as "polyoxyalkylene-based polymer (C)").

As the reactive silicon group of polyoxyalkylene-based polymer (C), the same silicon group as in polyoxyalkylene-based polymer (A) can be used.

The main chain structure of polyoxyalkylene-based polymer (C) may be linear or have a branched chain.

As a preferable synthesis method of polyoxyalkylene-based polymer (C), a method including obtaining a hydroxyl group-terminal polyoxyalkylene-based polymer by a method including polymerization of an epoxy compound with an initiator having a hydroxyl group, by using a double-metal cyanide catalyst such as zinc hexacyanocobaltate glyme complex or the like, converting a hydroxyl group of the obtained hydroxyl group-terminal polyoxyalkylene-based polymer to a carbon-carbon unsaturated group, and adding a silane compound by a hydrosilylation reaction can be mentioned.

As long as the effect of the present invention is not impaired, the composition of the present invention may contain, besides polyoxyalkylene-based polymer (A) and (meth)acrylate-based polymer (B), a (meth)acrylate-based polymer having a trialkoxysilyl group. As the trialkoxysilyl group that the (meth)acrylate-based polymer having a trialkoxysilyl group has, a trimethoxysilyl group, a triethoxysilyl group, and a triisopropoxysilyl group can be mentioned. However, since a higher content of the (meth)acrylate-based polymer having a trialkoxysilyl group may lower the strength of a cured product, the content of the (meth)acrylate-based polymer having a trialkoxysilyl group is preferably not more than 20 wt%, more preferably not more than 10 wt%, when the total of (meth)acrylate-based polymer (B) and the (meth)acrylate-based polymer having a trialkoxysilyl group is 100 wt%, and the absence of them is further preferable.

<<Other additive>>

The composition of the present invention may contain, besides polyoxyalkylene-based polymer (A) and (meth)acrylate-based polymer (B), silanol condensation catalyst, filler, adhesion-imparting agent, plasticizer, solvent, diluent, silicate, anti-sagging agent, antioxidant, light stabilizer, ultraviolet absorber, physical property modifier, tackifier resin, epoxy group-containing compound, photocurable substance, oxygen-curable substance, surface modifier, epoxy resin, other resin, flame-retardant and foaming agent as additives. The curable composition of the present invention

may also contain various additives as necessary in an attempt to adjust various properties of curable compositions or cured products. Examples of such additive include curability adjusting agent, radical inhibitor, metal deactivator, ozone-degradation inhibitor, phosphorus peroxide decomposer, lubricant, pigment, fungicide and the like.

<Silanol condensation catalyst>

In the present invention, a silanol condensation catalyst may be used for the purpose of accelerating the reaction of hydrolyzing and condensing the reactive silicon groups of polyoxyalkylene-based polymer (A) and (meth)acrylate-based polymer (B), and chain-extending or crosslinking the polymers.

It is already known that many catalysts can be used as silanol condensation catalysts and, for example, an organotin compound, a metal carboxylate, an amine compound, a carboxylic acid, an alkoxy metal, an inorganic acid and the like can be mentioned.

Specific examples of the organotin compound include dioctyltin dilaurate, dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate), dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin oxide, dibutyltin bis(acetylacetonate), dioctyltin bis(acetylacetonate), dibutyltin bis(ethylacetoacetonate), reaction product of dibutyltin oxide and silicate compound, reaction product of dioctyltinoxide and silicate compound, reaction product of dibutyltin oxide and phthalic acid ester and the like. Due to the growing interest in the environment in recent years, a dioctyltin compound is more preferably used than a dibutyltin compound.

Specific examples of the metal carboxylate include tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, cerium carboxylate and the like. As a carboxylic acid group, the following carboxylic acid and various metals can be combined. As the kind of the metal, divalent tin, bismuth, divalent iron, trivalent iron, zirconium and titanium are preferable since they have high activity, and divalent tin is most preferable.

Specific examples of the amine compound include aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, cyclohexylamine and the like; aliphatic secondary amines such as dimethylamine, diethylamine, dipropylamine, diisopropylamine, dibutylamine, diamylamine, dihexylamine, dioctylamine, di(2-ethylhexyl)amine, didecylamine, dilaurylamine, dicetylamine, distearylamine, methylstearylamine, ethylstearylamine, butylstearylamine and the like; aliphatic tertiary amines such as triamylamine, trihexylamine, trioctylamine and the like; aliphatic unsaturated amines such as triallylamine, oleylamine and the like; aromatic amines such as aniline, laurylaniline, stearylaniline, triphenylamine and the like; nitrogen-containing heterocyclic compounds such as pyridine, 2-aminopyridine, 2-(dimethylamino)pyridine, 4-(dimethylaminopyridine), 2-hydroxypyridine, imidazole, 2-ethyl-4-methylimidazole, morpholine, N-methylmorpholine, piperidine, 2-piperidinemethanol, 2-(2-piperidino)ethanol, piperidone, 1,2-dimethyl-1,4,5,6-tetrahydropyrimidine, 1,8-diazabicyclo[5,4,0]undecene-7 (DBU), 6-(dibutylamino)-1,8-diazabicyclo[5,4,0]undecene-7 (DBA-DBU), 6-(2-hydroxypropyl)-1,8-diazabicyclo[5,4,0]undeca-7-ene (OH-DBU), compounds wherein hydroxyl group of OH-DBU is modified by urethanation etc., 1,5-diazabicyclo[4,3,0]nonene-5 (DBN), 1,4-diazabicyclo[2,2,2]octane (DABCO), aziridine and the like; salts derived from nitrogen-containing heterocyclic compounds such as phenol salts of DBU (e.g., trade name: U-CAT SA1 (San-Apro Ltd.)), octylates of DBU (e.g., trade name: U-CAT SA102 (San-Apro Ltd.)), p-toluenesulfonates of DBU (e.g., trade name: U-CAT SA506 (San-Apro Ltd.)), octylates of DBN (e.g., trade name: U-CAT 1102 (San-Apro Ltd.) and the like; and other amines such as amines (e.g., monoethanolamine, diethanolamine, triethanolamine, 3-hydroxypropylamine, ethylenediamine, propylenediamine, hexamethylenediamine, N-methyl-1,3-propanediamine, N,N'-dimethyl-1,3-propanediamine, diethylenetriamine, triethylenetetramine, 2-(2-aminoethylamino)ethanol, benzylamine, 3-methoxypropylamine, 3-lauryloxypropylamine, 3-dimethylaminopropylamine, 3-diethylaminopropylamine, 3-dibutylaminopropylamine, 3-morpholinopropylamine, 2-(1-piperazinyl)ethylamine, xylylenediamine, 2,4,6-tris(dimethylaminomethyl)phenol and the like); guanidines (e.g., guanidine, phenylguanidine, diphenylguanidine and the like); biguanides (e.g., butylbiguanide, 1-o-tolylbiguanide, 1-phenylbiguanide and the like), and the like.

Of these, amidines such as 1,2-dimethyl-1,4,5,6-tetrahydropyrimidine, DBU, DBA-DBU, DBN and the like; guanidines such as guanidine, phenylguanidine, diphenylguanidine and the like; biguanides such as butylbiguanide, 1-o-tolylbiguanide, 1-phenylbiguanide and the like are preferable since they have high activity, and aryl group-substituted biguanides such as 1-o-tolylbiguanide, 1-phenylbiguanide and the like are preferable since they are expected to show high adhesiveness.

While amine compounds show basicity, amine compounds showing a pKa value of conjugate acid of 11 or more are preferable since they have high catalytic activity, and 1,2-dimethyl-1,4,5,6-tetrahydropyrimidine, DBU, DBN

and the like are particularly preferable since they show a pKa value of conjugate acid of 12 or more and exhibit high catalytic activity.

In the present invention, an amino group-containing silane coupling agent (also referred to as "aminosilane") and a ketimine compound that produces the aforementioned amine compound by hydrolysis can also be used as an amine compound to be used as a silanol condensation catalyst.

Specific examples of the carboxylic acid include acetic acid, propionic acid, butyric acid, 2-ethylhexanoic acid, lauric acid, stearic acid, oleic acid, linoleic acid, pivalic acid, 2,2-dimethylbutyric acid, 2,2-diethylbutyric acid, 2,2-dimethylhexanoic acid, 2,2-diethylhexanoic acid, 2,2-dimethyloctanoic acid, 2-ethyl-2,5-dimethylhexanoic acid, neodecanoic acid, versatic acid and the like. 2-Ethylhexanoic acid, nendecanoic acid and versatic acid show high activity and are preferable from the aspect of availability. Also, derivatives of the above-mentioned carboxylic acid, such as carboxylic acid anhydride, alkyl carboxylate, amide, nitrile, halogenated acyl and the like can also be used.

Specific examples of the alkoxy metal include titanium compounds such as tetrabutyl titanate, tetrapropyl titanate, titanium tetrakis(acetylacetonate), bis(acetylacetonate)diisopropoxy titanium, diisopropoxy titanium bis(ethylacetoacetate) and the like, aluminum compounds such as aluminum tris(acetylacetonate), aluminum tris(ethylacetoacetate), diisopropoxyaluminum ethylacetoacetate and the like, zirconium compounds such as zirconium tetrakis(acetylacetonate) and the like, and hafnium compounds such as tetrabutoxy hafnium and the like.

Examples of other silanol condensation catalyst include organic sulfonic acids such as trifluoromethane sulfonic acid and the like; inorganic acids such as hydrochloric acid, phosphoric acid, boronic acid and the like; boron trifluoride complexes such as boron trifluoride, boron trifluoride diethyl ether complex, boron trifluoride monoethylamine complex and the like; fluorine anion-containing compounds such as ammonium fluoride, tetrabutylammonium fluoride, potassium fluoride, cesium fluoride, fluoride hydrogen ammonium, 1,1,2,3,3,3-hexafluoro-1-diethylaminopropane (MEC81, common name, Ishikawa reagent), potassium hexafluorophosphate, $Na_2SiF_6$, $K_2SiF_6$, $(NH_4)_2SiF_6$ and the like.

Photoacid generators and photobase generators that generate acid or base by light can also be used as silanol condensation catalysts. Examples of the photoacid generator include onium salt photoacid generators, for example, triarylsulfonium salts such as p-phenylbenzylmethylsulfonium salt, p-hydroxyphenylbenzylmethylsulfonium salt, triphenylsulfonium salt, diphenyl[4-(phenylthio)phenyl]sulfonium salt and the like, 4,4-bis[di(β-hydroxyethoxy)phenylsulfonio]phenyl sulfide bishexafluoroantimonate, iodonium salts such as diphenyliodonium salt, bis(4-tert-butylphenyl)iodonium salt, (4-tert-butoxyphenyl)phenyliodonium salt, (4-methoxyphenyl)phenyliodonium salt and the like, sulfonic acid derivatives such as benzoin tosylare, pyrogallol trimesylate, nitrobenzyl-9,10-diethoxyanthracene-2-sulfonate, N-(trifluoromethylsulfonyloxy)succinimide, N-(trifluoromethylsulfonyloxy)phthalimide, N-(trifluoromethylsulfonyloxy)diphenylmaleimide, N-(trifluoromethylsulfonyloxy)bicyclo[2.2.1]hept-5-ene-2,3-dicarboxyimide, N-(trifluoromethylsulfonyloxy)naphthylimide and the like, diazomethanes such as bis(trifluoromethylsulfonyl)diazomethane, bis(cyclohexylsulfonyl)diazomethane, bis(phenylsulfonyl)diazomethane, bis(p-tolylsulfonyl)diazomethane, bis(2,4-xylylsulfonyl)diazomethane, bis(p-chlorophenylsulfonyl)diazomethane, methylsulfonyl-p-toluenesulfonyldiazomethane, cyclohexylsulfonyl(1,1-dimethylethylsulfonyl)diazomethane, bis(1,1-dimethylethylsulfonyl)diazomethane, phenylsulfonyl(benzoyl)diazomethane and the like, carboxylates, iron arene complexes and the like.

As a silanol condensation catalyst, two or more different kinds of catalysts may be used in combination, and a combined use of an amine compound and carboxylic acid may afford an effect of improving reactivity. The catalytic activity can also be enhanced by using an acid such as carboxylic acid or the like and a phosphonium salt compound such as tetrabutylphosphonium hydroxide or the like in combination. The reactivity may be improved by using a halogen-substituted aromatic compound such as pentafluorophenol, pentafluorobenzaldehyde or the like and an amine compound in combination.

The amount of the silanol condensation catalyst to be used is preferably 0.001 - 20 parts by weight, more preferably 0.01 - 15 parts by weight, particularly preferably 0.01 - 10 parts by weight, per 100 parts by weight of the total of polyoxyalkylene-based polymer (A) and (meth)acrylate-based polymer (B). When the amount of the silanol condensation catalyst is less than 0.001 part by weight, the reaction rate may become insufficient. On the other hand, when the amount of the silanol condensation catalyst exceeds 20 parts by weight, the reaction rate becomes too fast, so that the usable time of the composition becomes short, and the workability tends to be deteriorated and the storage stability tends to be deteriorated.

<Filler>

The composition of the present invention can contain various fillers. Examples of the filler include reinforcing fillers such as fumed silica, precipitated silica, crystal silica, molten silica, dolomite, silicic anhydride, hydrous silicic acid, and carbon black; fillers such as ground calcium carbonate, colloidal calcium carbonate, magnesium carbonate, diatomite, calcined clay, clay, talc, titanium oxide, bentonite, organic bentonite, ferric oxide, aluminum fine powder, flint powder, zinc oxide, activated zinc oxide, resin powders such as PVC powder, PMMA powder; fiber fillers such as glass fiber and filament and the like.

The amount of the filler to be used is preferably 1 - 300 parts by weight, particularly preferably 10 - 200 parts by weight, per 100 parts by weight of the total of polyoxyalkylene-based polymer (A) and (meth)acrylate-based polymer (B) having a reactive silicon group.

Organic balloons and inorganic balloons may be added to improve the workability (detachability etc.) of the composition. These fillers can be subjected to a surface treatment, only one kind thereof may be used, or two or more kinds thereof may be mixed and used. To improve workability (detachability etc.) in a coating operation of the composition, the particle size of the balloon is preferably not more than 0.1 mm. In addition, to make the surface of the cured product matte by a surface treatment of the balloon, the particle size of the balloon is preferably 5 to 300 μm. The above-mentioned "detachability" is a state in which stringiness does not occur in the workability of applying a composition packed in a cartridge, a tube or the like, and end breakage property of the composition from a cartridge, a tube or the like is good.

A balloon is a spherical filler with a hollow inside. The balloon can be added to reduce the weight by lowering the specific gravity of the composition. The materials of the balloon include, but are not limited to, inorganic materials such as glass, shirasu, silica and the like, and organic materials such as phenol resin, urea resin, polystyrene, saran and the like. It is also possible to mix plural kinds, to combine an inorganic material and an organic material, or to laminate them to form plural layers.

In addition, thermally expandable hollow microspheres described in JP-A-2004-51701, JP-A-2004-66749 and the like can be used. The thermally expandable hollow microsphere is a plastic sphere wrapping a low boiling point compound such as a hydrocarbon having 1 to 5 carbon atoms in a spherical shape with a polymer outer shell material (e.g., vinylidene chloride-based copolymer, acrylonitrile-based copolymer, or vinylidene chloride-acrylonitrile copolymer). By heating an adhesive portion of an adhesive containing the thermally expandable hollow microsphere, the gas pressure inside the shell of the thermally expandable hollow microsphere increases and the polymer outer shell material softens. As a result, the volume swells dramatically to detach the adhesive interface. By the addition of the thermally expandable hollow microspheres, the materials can be easily peeled without destruction when not necessary only by heating, and an adhesive composition peelable by heating can be obtained without using any organic solvent.

The composition of the present invention can contain an adhesion-imparting agent. As the adhesion-imparting agent, a silane coupling agent, a reaction product of a silane coupling agent, or a compound other than a silane coupling agent can be added.

Specific examples of the silane coupling agent include amino group-containing silanes such as N-(2-aminoethyl)-3-aminopropyltrimethoxysilane, γ-aminopropyltrimethoxysilane, γ-aminopropyltriethoxysilane, γ-aminopropyltris(2-propoxy)silane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-aminopropyltriethoxysilane, N-β-aminoethyl-γ-aminopropylmethyldiethoxysilane, N-β-aminoethyl-γ-aminopropyltriisopropoxysilane, N-β-(β-aminoethyl)aminoethyl-γ-aminopropyltrimethoxysilane, N-6-aminohexyl-γ-aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, (aminomethyl)dimethoxymethylsilane, (aminomethyl)trimethoxysilane, (phenylaminomethyl)dimethoxymethylsilane, (phenylaminomethyl)trimethoxysilane, bis(3-trimethoxysilylpropyl)amine, N,N'-bis[3-(trimethoxysilyl)propyl]ethylenediamine and the like; isocyanate group-containing silanes such as γ-isocyanate propyltrimethoxysilane, γ-isocyanate propyltriethoxysilane, γ-isocyanate propylmethyldiethoxysilane, γ-isocyanate propylmethyldimethoxysilane, α-isocyanate methyltrimethoxysilane, α-isocyanate methyldimethoxymethylsilane and the like; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane and the like; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, β-(3,4-epoxycyclohexyl)ethyltriethoxysilane and the like; carboxy silanes such as β-carboxyethyltriethoxysilane, β-carboxyethylphenylbis (β-methoxyethoxy)silane, N-β-(carboxymethyl)aminoethyl-γ-aminopropyltrimethoxysilane and the like; vinyl unsaturated group-containing silanes such as vinyltrimethoxysilane, vinyltriethoxysilane, γ-methacryloyloxypropylmethyldimethoxysilane, γ-acryloyloxypropyltriethoxysilane and the like; halogen-containing silanes such as γ-chloropropyltrimethoxysilane and the like; isocyanurate silanes such as tris(trimethoxysilyl)isocyanurate and the like; carbamate silanes such as methyl(N-dimethoxymethylsilylmethyl)carbamate, methyl (N-trimethoxysilylmethyl)carbamare, methyl (N-dimethoxymethylsilylpropyl)carbamate, methyl(N-trimethoxysilylpropyl)carbamate and the like; alkoxy group-containing silanes such as (methoxymethyl)dimethoxymethylsilane, (methoxymethyl)trimethoxysilane, (ethoxymethyl)trimethoxysilane, (phenoxymethyl)trimethoxysilane and the like; acid anhydride-containing silanes such as 3-(trimethoxysilyl)propylsuccinic anhydride, 3-(triethoxysilyl)propylsuccinic anhydride and the like, and the like. In addition, partially condensed products of these, and modified derivatives thereof such as amino-modified silyl polymer, silylated amino polymer, unsaturated aminosilane complex, phenylamino long-chain alkyl silane, aminosilylated silicone, silylated polyester and the like can also be used as silane coupling agents.

One or more kinds of silane coupling agents can be used.

In addition, a reaction product of various silane coupling agents can also be used. As the reaction product, a reaction product of an isocyanate silane and a hydroxyl group-containing compound, a reaction product of an isocyanate silane and an amino group-containing compound, a reaction product of an aminosilane and a (meth)acrylic group-containing compound (Michael addition reaction product), a reaction product of an aminosilane and an epoxy group-containing compound, a reaction product of an epoxysilane and a carboxylic acid group-containing compound, a reaction product of an epoxysilane and an amino group-containing compound and the like can be mentioned. Reaction products of silane coupling agents such as a reaction product of an isocyanate silane and an aminosilane, a reaction product of an aminosilane and a (meth)acrylic group-containing silane, a reaction product of an aminosilane and an epoxysilane, a reaction product of an aminosilane and an acid anhydride-containing silane and the like can also be used. One or more kinds of these reaction products can be used.

Specific examples of the adhesiveness-imparting agent other than the silane coupling agent include, but are not particularly limited to, epoxy resin, phenol resin, sulfur, alkyl titanates, aromatic polyisocyanate and the like.

The adhesiveness-imparting agent may be used alone, or two or more kinds thereof may be used concurrently. By adding the adhesiveness-imparting agent, the adhesiveness to an adherend can be improved.

The amount of the adhesiveness-imparting agent to be used is preferably 0.1 - 20 parts by weight, particularly preferably 0.5 - 10 parts by weight, per 100 parts by weight of the total of polyoxyalkylene-based polymer (A) and (meth)acrylate-based polymer (B).

<Plasticizer>

The composition of the present invention can contain a plasticizer. Addition of plasticizer enables adjustment of the viscosity and slump property of a composition, and mechanical properties of a cured product obtained by curing the curable composition, such as hardness, tensile strength, elongation and the like. Specific examples of the plasticizer include phthalate compounds such as dibutyl phthalate, diisononyl phthalate (DINP), diheptyl phthalate, di(2-ethylhexyl) phthalate, diisodecyl phthalate (DIDP), butyl benzyl pthalate and the like; terephthalate compounds such as bis(2-ethylhexyl)-1,4-benzenedicarboxylate and the like (specifically, trade name: EASTMAN168 (manufactured by EASTMAN CHEMICAL)); non-phthalate compounds such as diisononyl 1,2-cyclohexanedicarboxylate and the like (specifically, trade name: Hexamoll DINCH (manufactured by BASF)); polyvalent aliphatic carboxylate compounds such as dioctyl adipate, dioctyl sebacate, dibutyl sebacate, diisodecyl succinate, tributyl acetylcitrate and the like; unsaturated fatty acid ester compounds such as butyl oleate, methyl acetylricinoleate and the like; phenyl alkylsulfonates (specifically, trade name: Mesamoll (manufactured by LANXESS)); phosphate compounds such as tricresyl phosphate, tributyl phosphate and the like; trimellitate compounds; chlorinated paraffin; hydrocarbon oils such as alkyl diphenyl, partially hydrogenated terphenyl and the like; process oil; epoxy plasticizers such as epoxydized soybean oil, benzyl epoxystearate and the like, and the like.

A high molecular weight plasticizer can also be used. When a high molecular weight plasticizer is used, the initial properties can be maintained for a long term as compared to the use of a low molecular weight plasticizer. In addition, drying performance (coatability) when alkyd paint is applied to a cured product can be improved. Specific examples of the high molecular weight plasticizer include vinyl polymers obtained by polymerizing vinyl monomer by various methods; polyalkylene glycol esters such as diethylene glycol dibenzoate, triethylene glycol dibenzoate, pentaerythritol ester and the like; polyester-based plasticizers obtained from a dibasic acid such as sebacic acid, adipic acid, azelaic acid, phthalic acid or the like and a divalent alcohol such as ethylene glycol, diethylene glycol, triethylene glycol, propylene glycol, dipropylene glycol or the like; polyethers such as polyetherpolyols having a number average molecular weight of not less than 500, further not less than 1,000, such as polyethylene glycol, polypropylene glycol, polytetramethylene glycol and the like, or derivatives of polyether polyols such as wherein hydroxy groups of these polyether polyols are converted to ester group, ether groups etc.; polystyrenes such as polystyrene, poly-$\alpha$-methylstyrene and the like; polybutadiene, polybutene, polyisobutylene, butadiene-acrylonitrile, polychloroprene and the like. Various polymers can also be copolymerized with reactive group-containing monomers to impart physical properties. For example, it is known that use of polybutadiene grafted with maleic acid improves adhesiveness improving effect and elasticity recovery rate.

The amount of the plasticizer to be used is preferably 5 - 150 parts by weight, more preferably 10 - 120 parts by weight, particularly preferably 20 - 100 parts by weight, per 100 parts by weight of the total of polyoxyalkylene-based polymer (A) and (meth)acrylate-based polymer (B). When the content is less than 5 parts by weight, the effect of the plasticizer is not developed, and when it exceeds 150 parts by weight, the mechanical strength of a cured product becomes insufficient. The plasticizer may be used alone, or two or more kinds thereof may be used in combination. In addition, a low molecular weight plasticizer and a high molecular weight plasticizer may be used in combination. These plasticizers can also be added during production of polymer.

<Solvent, diluent>

The composition of the present invention can contain a solvent or a diluent. While the solvent and diluent are not particularly limited, aliphatic hydrocarbon, aromatic hydrocarbon, alicyclic hydrocarbon, halogenated hydrocarbon, alcohol, ester, ketone, ether and the like can be used. When the solvent or diluent is used, the boiling point of the solvent is preferably not less than 150°C, more preferably not less than 200°C, particularly preferably not less than 250°C, in view of the problem of air pollution during indoor use of the composition. Only any one kind of the above-mentioned solvent and diluent may be used, or two or more kinds thereof may be used in combination.

<Silicate>

The curable composition of the present invention can contain silicate. The silicate acts as a crosslinking agent and has a function to improve recovery property, durability, and creep resistance of a cured product obtained from the curable composition of the present invention. Furthermore, silicate also has an effect to improve the adhesiveness and water-resistant adhesiveness, as well as adhesion durability under high temperature and high humidity conditions. Specific examples of the silicate include tetraalkoxysilanes (tetraalkyl silicates) and partially hydrolyzed condensates thereof such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, tetra-t-butoxysilane and the like. The partially hydrolyzed condensate of tetraalkoxysilane is more preferable since it shows a greater improvement effect on the resilience, durability and creep resistance of the present invention than with tetraalkoxysilane.

Specific examples of the silicate include tetraalkoxysilanes (tetraalkyl silicates) and partially hydrolyzed condensates thereof such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, tetra-t-butoxysilane and the like.

The partially hydrolyzed condensate of tetraalkoxysilane is more preferable since it shows a greater improvement effect on the resilience, durability and creep resistance of the present invention than with tetraalkoxysilane.

As the aforementioned partially hydrolyzed condensate of tetraalkoxysilane, for example, one obtained by adding water to tetraalkoxysilane to allow partial hydrolysis and then condensation thereof by a conventional method can be mentioned. In addition, as a partially hydrolyzed condensate of an organosilicate compound, a commercially available product can be used. As such condensate, for example, methyl silicate 51, ethyl silicate 40 (both manufactured by COLCOAT CO., LTD.) or the like can be mentioned.

When silicate is used, the amount thereof to be used is 0.1 - 20 parts by weight, preferably 0.5 - 10 parts by weight, per 100 parts by weight of the total of polyoxyalkylene-based polymer (A) and (meth)acrylate-based polymer (B).

<Anti-sagging agent>

The composition of the present invention may contain an anti-sagging agent, as necessary, to prevent sagging and improve workability. While the anti-sagging agent is not particularly limited, for example, polyamide waxes; fatty acid amide waxes; hydrogenated castor oil derivatives; metal soaps such as calcium stearate, aluminum stearate, barium stearate and the like, and the like can be mentioned. When a rubber powder having a particle size of 10 - 500 μm as described in JP-A-11-349916 or an organic fiber as described in JP-A-2003-155389 is used, a composition showing high thixotropy and good workability can be obtained. Such anti-sagging agent may be used alone, or two or more kinds thereof may be used in combination.

The amount of the anti-sagging agent to be used is preferably 0.1 - 20 parts by weight per 100 parts by weight of the total of polyoxyalkylene-based polymer (A) and (meth)acrylate-based polymer (B).

<Antioxidant>

The curable composition of the present invention can contain an antioxidant (age resister). When an antioxidant is used, weather resistance of a cured product can be enhanced. Specific examples thereof include hindered phenol-based, monophenol-based, bisphenol-based, and polyphenol-based antioxidants, and the hindered phenol-based antioxidant is particularly preferable. Similarly, hindered amine light stabilizers such as Tinuvin 622 LD, Tinuvin 144; CHIMASSORB944LD, CHIMASSORB119FL (each of the above manufactured by Ciba Japan K.K.); Adekastab LA-57, LA-62, LA-67, LA-63, LA-68 (each of the above is manufactured by ADEKA CORPORATION); Sanol LS-770, Sanol LS-765, Sanol LS-292, Sanol LS-2626, Sanol LS-1114, Sanol LS-744 (each of the above is manufactured by Sankyo Lifetech Co., Ltd.), and the like can also be used. Specific examples of the antioxidant are also recited in JP-A-4-283259 and JP-A-9-194731. The amount of the antioxidant to be used is preferably 0.1 - 10 parts by weight, more preferably 0.2 - 5 parts by weight, per 100 parts by weight of the total of polyoxyalkylene-based polymer (A) and (meth)acrylate-based

polymer (B).

<Light stabilizer>

The composition of the present invention can contain a light stabilizer. Use of a light stabilizer prevents degradation of a cured product due to photooxidation. Examples of the light stabilizer include benzotriazole-based, hindered amine-based, benzoate-based compounds and the like, and the hindered amine-based compound is particularly preferable. The amount of the light stabilizer to be used is preferably 0.1 - 10 parts by weight, particularly preferably 0.2 - 5 parts by weight, per 100 parts by weight of the total of polyoxyalkylene-based polymer (A) and (meth)acrylate-based polymer (B).

When a photocurable substance, particularly an unsaturated acrylic compound, is added to the curable composition of the present invention, a tertiary amine-containing hindered amine-based light stabilizer is preferably used as a hindered amine-based light stabilizer, as described in JP-A-5-70531, to improve preservation stability of the curable composition. Examples of the tertiary amine-containing hindered amine-based light stabilizer include light stabilizers such as Tinuvin 622 LD, Tinuvin 144, Tinuvin 770; CHIMASSORB119FL (each of the above manufactured by BASF) ; Adekastab LA-57, LA-62, LA-67, LA-63 (each of the above is manufactured by ADEKA CORPORATION); Sanol LS-770, Sanol LS-765, LS-292, LS-2626, LS-1114, LS-744 (each of the above is manufactured by Sankyo Lifetech Co., Ltd.), and the like.

<Ultraviolet absorber>

In the curable composition of the present invention, a ultraviolet absorber can be used. When a ultraviolet absorber is used, weather resistance of the surface of a cured product can be enhanced. Examples of the ultraviolet absorber include benzophenone-based, benzotriazole-based, salicylate-based, substituted tolyl-based and metal chelate-based compounds and the like. Of these, the benzotriazole-based compound is particularly preferable. Examples thereof include trade name Tinuvin P, Tinuvin 213, Tinuvin 234, Tinuvin 326, Tinuvin 327, Tinuvin 328, Tinuvin 329, and Tinuvin 571 (each of the above manufactured by BASF). Particularly preferred is a 2-(2H-1,2,3-benzotriazol-2-yl)-phenol-based compound. Furthermore, a combined use of a phenol-based or hindered phenol-based antioxidant, and a hindered amine-based light stabilizer, and a benzotriazole-based ultraviolet absorber is preferable.

The amount of the ultraviolet absorber to be used is preferably 0.1 - 10 parts by weight, more preferably 0.2 - 5 parts by weight, per 100 parts by weight of the total of polyoxyalkylene-based polymer (A) and (meth)acrylate-based polymer (B).

<Physical property modifier>

The curable composition of the present invention may contain a physical property modifier, as necessary, that controls the tensile property of the obtained cured product. While the physical property modifier is not particularly limited, for example, alkylalkoxysilanes such as phenoxytrimethylsilane, methyltrimethoxysilane, dimethyldimethoxysilane, trimethylmethoxysilane, n-propyltrimethoxysilane and the like; arylalkoxysilanes such as diphenyldimethoxysilane, phenyltrimethoxysilane and the like; alkylisopropenoxysilanes such as dimethyldiisopropenoxysilane, methyltriisopropenoxysilane, $\gamma$-glycidoxypropylmethyldiisopropenoxysilane and the like; trialkylsilyl borates such as tris(trimethylsilyl) borate, tris(triethylsilyl) borate and the like; silicone varnishes; polysiloxanes and the like can be mentioned. Using the above-mentioned physical property modifier, the hardness of the composition of the present invention after curing may be increased or conversely decreased to improve elongation at break. Only one kind of the above-mentioned physical property modifier may be used, or two or more kinds thereof may be used in combination.

Particularly, a compound that forms a compound having a monovalent silanol group in a molecule by hydrolysis has an action to decrease the modulus of the cured product without worsening the stickiness of the surface of the cured product. Particularly, a compound forming trimethylsilanol is preferable. As the compound that forms a compound having a monovalent silanol group in a molecule by hydrolysis, a compound described in JP-A-5-117521 can be mentioned as an example. In addition, a compound that forms a silicone compound that forms silane monools such as trimethylsilanol and the like by hydrolysis, which is a derivative of an alkyl alcohol such as hexanol, octanol, decanol or the like, a compound that forms a silicone compound that forms a silane monool by hydrolysis, which is a derivative of a polyvalent alcohol having not less than 3 hydroxy groups, such as trimethylolpropane, glycerol, pentaerythritol, sorbitol or the like as described in JP-A-11-241029 can be mentioned.

The amount of the physical property modifier to be used is preferably 0.1 - 10 parts by weight, particularly preferably 0.5 - 5 parts by weight, per 100 parts by weight of the total of polyoxyalkylene-based polymer (A) and (meth)acrylate-based polymer (B).

<Tackifier resin>

In the present invention, a tackifier resin can be added to enhance adhesiveness and close adhesiveness to a substrate or according to other needs. The tackifier resin is not particularly limited, and one generally used can be used. Specific examples thereof include terpene-based resin, aromatic modified terpene resin, hydrogenated terpene resin obtained by hydrogenating same, terpene-phenol resin obtained by copolymerizing terpenes with phenols, phenol resin, modified phenol resin, xylene phenol resin, cyclopentadiene phenol resin, coumarone-indene resin, rosin resin, rosin ester resin, hydrogenated rosin ester resin, xylene resin, low-molecular weight polystyrene-based resin, styrene copolymer resin, petroleum resin (e.g., C5 hydrocarbon resin, C9 hydrocarbon resin, C5C9 hydrocarbon copolymer resin etc.), hydrogenated petroleum resin, DCPD resin and the like. These may be used alone, or two or more kinds thereof may be used in combination.

The styrene copolymer resin is not particularly limited, and examples thereof include styrene-butadiene-styrene block copolymer (SBS), styrene-isoprene-styrene block copolymer (SIS), styrene-ethylenebutylene-styrene block copolymer (SEBS), styrene-ethylenepropylene-styrene block copolymer (SEPS), styrene-isobutylene-styrene block copolymer (SIBS) and the like. Of these, terpene-phenol resin is preferable since it shows high compatibility with reactive silicon group-containing polyoxyalkylene-based polymer (A) and affords highly close adhering effect. On the other hand, when color tone is important, a hydrocarbon resin is preferable.

The amount of the tackifier resin to be used is preferably 2 - 100 parts by weight, more preferably 5 - 50 parts by weight, further preferably 5 - 30 parts, per 100 parts by weight of the total of polyoxyalkylene-based polymer (A) and (meth)acrylate-based polymer (B). When it is less than 2 parts by weight, an adhesion and close adhesion effect to a substrate is difficult to obtain, and when it exceeds 100 parts by weight, the viscosity of the curable composition sometimes becomes too high and handling becomes difficult.

<Epoxy group-containing compound>

An epoxy group-containing compound can be used for the composition of the present invention. By the use of the epoxy group-containing compound, the recovery property of the cured product can be increased. As the epoxy group-containing compound, epoxydized unsaturated fats and oils, epoxydized unsaturated fatty acid esters, alicyclic epoxy compounds, compounds shown as epichlorohydrin derivatives and mixtures thereof and the like can be mentioned as examples. Specifically, epoxydized soy bean oil, epoxydized linseed oil, bis(2-ethylhexyl)-4,5-epoxycyclohexane-1,2-dicarboxylate (E-PS), epoxyoctyl stearate, epoxybutyl stearate and the like can be mentioned. Of these, E-PS is particularly preferable. An epoxy compound is preferably used within the range of 0.5 - 50 parts by weight per 100 parts by weight of the total of polyoxyalkylene-based polymer (A) and (meth)acrylate-based polymer (B).

<Photocurable substance>

A photocurable substance can be used for the composition of the present invention. When a photocurable substance is used, a film of the photocurable substance is formed on the surface of the cured product, the stickiness and weather resistance of the cured product can be improved. The photocurable substance is one that shows chemical changes of the molecular structure in a considerably short time by the action of light to produce physical changes such as curing. As such kinds of compounds, many are known such as organic monomer, oligomer, resin, compositions containing same and the like, and any commercially available one can be employed. Representative ones include unsaturated acrylic compounds, polyvinyl cinnamate, azide resin and the like.

Examples of the unsaturated acrylic compound include monomers, oligomers or mixtures thereof, having one to several acrylic or methacrylic unsaturated groups, for example, monomers such as propylene (or butylene, ethylene)glycol di(meth)acrylate, neopentylglycol di(meth)acrylate and the like and oligoesters having a molecular weight of not more than 10,000. Specific examples include special acrylate (bifunctional) Aronix M-210, Aronix M-215, Aronix M-220, Aronix M-233, Aronix M-240, Aronix M-245; (trifunctional) Aronix M-305, Aronix M-309, Aronix M-310, Aronix M-315, Aronix M-320, AronixM-325, and (multifunctional) Aronix M-400 and the like. Particularly, a compound containing an acrylic functional group is preferable, and a compound containing 3 or more, same functional groups on average in one molecule is preferable (each Aronix recited above is a product of Toagosei Chemical Industry Co., Ltd.).

Examples of the polyvinyl cinnamate include a photosensitive resin having a cinnamoyl group as a photosensitive group, wherein poly(vinyl alcohol) is esterified by cinnamic acid, and many other polyvinyl cinnamate derivatives. Azide resin is known to be a photosensitive resin containing an azido group as a photosensitive group, and it is generally a rubber photosensitive liquid containing compound as a photosensitizer. Detailed examples are disclosed in "Photosensitive Resin" (Insatsu Gakkai Shuppanbu Ltd., page 93-, page 106-, page 117-, March 17, 1972), and these can be used singly or mixed and added with a sensitizer as necessary and used. When a sensitizer such as ketones, nitro compounds and the like, or a promoter such as amines and the like is added, the effect is sometimes enhanced.

The photocurable substance is preferably used in an amount of 0.1 - 20 parts by weight, preferably 0.5 - 10 parts by weight, per 100 parts by weight of the total of polyoxyalkylene-based polymer (A) and (meth)acrylate-based polymer (B). When it is not more than 0.1 part by weight, an enhancing effect on weather resistance is void, and when it is not less than 20 parts by weight, the cured product becomes too hard and tends to crack.

<Oxygen-curable substance>

The composition of the present invention can contain an oxygen-curable substance. As the oxygen-curable substance, an unsaturated compound reactive with oxygen in the air can be mentioned as an example. It reacts with oxygen in the air, forms a cured film near the surface of the cured product and prevents stickiness of the surface and attachment of dust and dirt to the surface of the cured product. Specific examples of the oxygen-curable substance include dry oils such as tung oil, linseed oil and the like, various alkyd resins obtained by modifying such compound; acrylic polymer, epoxy resin and silicone resin, each modified by dry oil; liquid diene polymers such as 1,2-polybutadiene, 1,4-polybutadiene, C5 - C8 diene polymer and the like obtained by polymerization or copolymerization of diene compounds such as butadiene, chloroprene, isoprene, 1,3-pentadiene and the like, liquid copolymers such as NBR, SBR and the like obtained by copolymerization of monomers such as acrylonitrile, styrene and the like, which are copolymerizable with these diene compounds, such that the diene compound becomes the main component, modified products thereof (maleic modified products, boil oil modified products and the like) and the like. They may be used alone, or two or more kinds thereof may be used in combination. Of these, tung oil and liquid diene polymer are particularly preferable. In addition, a combined use with a catalyst that promotes oxidation curing reaction or a metal dryer may enhance the effect. As such catalyst and metal dryer, metal salts such as cobalt naphthenate, lead naphthenate, zirconium naphthenate, cobalt octylate, zirconium octylate and the like, amidine compounds and the like can be mentioned as ewamples.

The amount of the oxygen-curable substance to be used is preferably 0.1 - 20 parts by weight, more preferably 0.5 - 10 parts by weight, per 100 parts by weight of the total of polyoxyalkylene-based polymer (A) and (meth)acrylate-based polymer (B). When the aforementioned amount to be used is less than 0.1 part by weight, improvement of staining property becomes insufficient, and when it exceeds 20 parts by weight, the tensile property and the like of the cured product tend to be impaired. As described in JP-A-3-160053, the oxygen-curable substance is preferably used in combination with a photocurable substance.

<Surface modifier>

The composition of the present invention may contain a surface modifier. As the surface modifier, long-chain alkylamines such as laurylamine and the like, phosphorous compounds such as sodium 2,2'-methylenebis(4,6-di-t-butylphenyl)phosphate, tris(2,4-di-t-butylphenyl)phosphite and the like, oxazolidine compounds and the like can be mentioned.

The amount of the surface modifier to be used is preferably 0.3 - 10 parts by weight per 100 parts by weight of the total of polyoxyalkylene-based polymer (A) and (meth)acrylate-based polymer (B).

<Epoxy resin>

The composition of the present invention can be used in combination with an epoxy resin. A curable composition containing an epoxy resin is particularly preferable as an adhesive, especially an adhesive for external wall tiles. Examples of the epoxy resin include, but are not limited to, flame-retardant epoxy resins such as epichlorohydrin-bisphenol A epoxy resin, epichlorohydrin-bisphenol F epoxy resin, tetrabromobisphenol A glycidyl ether and the like, novolac epoxy resin, hydrogenated bisphenol A epoxy resin, glycidyl ether epoxy resin of bisphenol A propylene oxide addition product, p-oxybenzoic acid glycidyl ether ester epoxy resin, m-aminophenol-based epoxy resin, diaminodiphenylmethane-based epoxy resin, urethane modified epoxy resin, various kinds of alicyclic epoxy resins, N,N-diglycidyl aniline, N,N-diglycidyl-o-toluidine, triglycidyl isocyanurate, polyalkylene glycol diglycidyl ether, a glycidyl ether of a polyvalent alcohol such as glycerol or the like, hydantoin epoxy resin, an epoxy product of a unsaturated polymer such as petroleum resin or the like, and the like. Conventional epoxy resins can be used. One containing at least two epoxy groups in a molecule is preferable, since it shows high reactivity during curing, and the cured product easily forms a three-dimensional network and the like. More preferred are bisphenol A type epoxy resins, novolac type epoxy resin or the like.

The ratio (weight ratio) of these epoxy resins and the total of polyoxyalkylene-based polymer (A) and (meth)acrylate-based polymer (B) to be used is (A+B)/epoxy resin=100/1 - 1/100. When the ratio of (A+B)/epoxy resin is less than 1/100, an improving effect on the impact strength and toughness by the epoxy resin cured product is difficult to obtain, and when the ratio of (A+B)/epoxy resin exceeds 100/1, the strength of the polymer cured product becomes insufficient. A preferable use ratio cannot be determined unconditionally, since it varies depending on the use of a curable resin composition and the like. For example, when impact resistance, flexibility, toughness, peel strength and the like of an

epoxy resin cured product are improved, the total of polyoxyalkylene-based polymer (A) and (meth) acrylate-based polymer (B) is preferably used at 1 - 100 parts by weight, more preferably 5 - 100 parts by weight, per 100 parts by weight of the epoxy resin. On the other hand, when the strength of a cured product is to be improved, preferably 1 - 200 parts by weight, more preferably 5 - 100 parts by weight, of the epoxy resin is used relative to 100 parts by weight of the total of polyoxyalkylene-based polymer (A) and (meth)acrylate-based polymer (B).

When an epoxy resin is added, the composition of the present invention can naturally contain a curing agent for curing the epoxy resin for combined use. A usable curing agent for epoxy resin is not particularly limited, and a conventionally-used curing agent for epoxy resin can be used. Specific examples thereof include, but are not limited to, primary or secondary amines such as triethylenetetramine, tetraethylenepentamine, diethylaminopropylamine, N-aminoethylpiperidine, m-xylylenediamine, m-phenylenediamine, diaminodipnenylmerhane, diaminodiphenylsulfone, isophoronediamine, amine-terminal polyether and the like; tertiary amines and salts thereof such as 2,4,6-tris(dimethylaminomethyl)phenol, tripropylamine and the like; polyamide resins; imidazoles; dicyanodiamides; boron trifluoride complex compounds, carboxylic anhydrides such as phthalic anhydride, hexahydrophthalic anhydride, tetrahydrophthalic anhydride, dodecinyl succinic anhydride, pyromellitic anhydride, chlorendic anhydride and the like; alcohols; phenols; carboxylic acids; compounds such as a diketone complex compound of aluminum or zirconium and the like. The curing agent may be used alone, or two or more kinds thereof may be used in combination. When a curing agent for epoxy resin is used, the amount thereof to be used is preferably 0.1 - 300 parts by weight per 100 parts by weight of the epoxy resin.

As the curing agent for epoxy resin, ketimine can be used. Ketimine is stably present in a state free of moisture, and decomposed into primary amine and ketone by reacting with moisture, and the resulting primary amine is a room temperature-curable curing agent for epoxy resin. Use of ketimine affords a one-component composition. Such ketimine can be obtained by the condensation reaction of an amine compound and a carbonyl compound.

For the synthesis of ketimine, known amine and carbonyl compounds may be used. For example, as the amine compound, diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, p,p'-biphenylenediamine and the like; polyvalent amines such as 1,2,3-triaminopropane, triaminobenzene, tris(2-aminoethyl)amine, tetra(aminomethyl)methane and the like; polyalkylenepolyamines such as diethylenetriamine, triethylenetriamine, tetraethylenepentamine and the like; polyoxyalkylene-based polyamine; aminosilanes such as γ-aminopropyltriethoxysilane, N- (β-aminoethyl) -γ-aminopropyltrimethoxysilane, N-(β-aminoethyl)-γ-aminopropylmethyldimethoxysilane and the like; and the like can be used. As the carbonyl compound, aldehydes such as acetaldehyde, propionaldehyde, n-butylaldehyde, isobutylaldehyde, diethylacetoaldehyde, glyoxal, benzaldehyde and the like; cyclic ketones such as cyclopentanone, trimethylcyclopentanone, cyclohexanone, trimethylcyclohexanone and the like; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, diisobutyl ketone and the like; β-dicarbonyl compounds such as acetylacetone, methyl acetoacetate, ethyl acetoacetate, dimethyl malonate, diethyl malonate, methyl ethyl malonate, dibenzoylmethane and the like; and the like can be used.

When an imino group is present in ketimine, the imino group may be reacted with styrene oxide; glycidyl ethers such as butylglycidyl ether, allyl glycidyl ether and the like; glycidyl ester and the like.

These ketimines may be used alone, or two or more kinds thereof may be used in combination. Ketimine is used in an amount of 1 - 100 parts by weight per 100 parts by weight of the epoxy resin. The amount thereof to be used varies depending on the kind of epoxy resin and ketimine.

<Flame-retardant>

The composition of the present invention can contain a flame-retardant such as phosphorus plasticizers such as ammonium polyphosphate, tricresyl phosphate and the like, and aluminum hydroxide, magnesium hydroxide, and thermally expandable graphite and the like. The above-mentioned flame-retardant may be used alone, or two or more kinds thereof may be used in combination.

The flame-retardant is used within the range of 5 - 200 parts by mass, preferably 10 - 100 parts by mass, per 100 parts by weight of the total of polyoxyalkylene-based polymer (A) and (meth)acrylate-based polymer (B).

<Foaming agent>

The composition of the present invention can be used as a foamed material using a foaming agent. For example, liquefied gases such as butane, propane, ethane, methane, dimethyl ether and the like can be used as a propellant for aerosol. Also, compressed gases such as air, oxygen, nitrogen, carbon dioxide and the like may be used. As a hydrocarbon solvent having a boiling point of 10 - 100°C, a propellant containing pentane, hexane or heptane can also be used. As a foam stabilizer, a siloxane-oxyalkylene copolymer can be used. The amount of the foaming agent to be used is 5 -

100 ml, preferably 5 - 50 ml, more preferably 5 - 20 ml, relative to 100 g of the total of polyoxyalkylene-based polymer (A) and (meth)acrylate-based polymer (B).

«Preparation of curable composition»

The curable composition of the present invention can also be prepared as a one-component type to be cured by moisture in the air after application by previously blending all components to be blended, and preserving same after tightly sealing. In addition, it can also be prepared as a two-component type to be used by mixing a curing agent containing components such as curing catalyst, filler, plasticizer, water and the like, which is prepared separately, and an organic polymer composition before use. In view of workability, a one-component type is preferable

When the above-mentioned curable composition is a one-component type, all components to be blended are blended in advance. Therefore, components containing moisture to be blended are preferably dehydrated and dried before use, or dehydrated during kneading under reduced pressure and the like. When the above-mentioned curable composition is a two-component type, a silanol condensation catalyst does not need to be added to a main agent containing an organic polymer having a reactive silicon group. Therefore, even when components to be blended contain some moisture, an increase in the viscosity of components added and gelation thereof are not feared; however, when storage stability over a long term is necessary, components to be blended are preferably dehydrated and dried. When the component is solid such as powder and the like, a dehydrating and drying method is preferably a heat drying method, and when the component is liquid, a reduced pressure dehydrating method, or a dehydrating method using synthetic zeolite, activated alumina, silica gel, calcined lime, magnesium oxide or the like is preferable. In addition, it is possible to perform dehydration by adding a small amount of an isocyanate compound to allow for a reaction of the isocyanate group and water. Alternatively, an oxazolidine compound such as 3-ethyl-2-methyl-2-(3-methylbutyl)-1,3-oxazolidine or the like may be blended and reacted with water to perform dehydration. The storage stability is further improved by adding a lower alcohol such as methanol, ethanol or the like; an alkoxysilane compound such as n-propyltrimethoxysilane, vinyltrimethoxysilane, vinylmethyldimethoxysilane, γ-mercaptopropylmethyldimethoxysilane, γ-mercaptopropylmethyldiethoxysilane, γ-glycidoxypropyltrimethoxysilane or the like in addition to the dehydrating and drying method.

The amount of the dehydrating agent, particularly silicon compounds capable of reacting with water such as vinyltrimethoxysilane and the like, to be used is preferably 0.1 - 20 parts by weight, preferably 0.5 - 10 parts by weight, per 100 parts by weight of the total of polyoxyalkylene-based polymer (A) and (meth)acrylate-based polymer (B).

The production method of the composition of the present invention is not particularly limited. For example, a conventional method including blending the above-mentioned components, kneading the mixture in a mixer, roll, kneader or the like at ambient temperature or under heating, or including dissolving the components in a small amount of a solvent and mixing same, or the like can be adopted.

The curable composition of the present invention is a moisture reaction type composition, the reaction of which proceeds by moisture. It can also be used as a so-called dual curable composition to be used in combination with a thermosetting resin, a photo-curable resin or a radiation-curable resin. Specifically, a curable resin utilizing enethiol addition reaction, radical polymerization reaction of (meth)acrylic groups, ring opening polymerization reaction of epoxy groups, addition reaction by hydrosilylation, urethanated reaction and the like can be used in combination.

The composition of the present invention is suitable for use as a curable composition or a pressure-sensitive adhesive composition, and is useful as an adhesive, a sealing material for buildings, ships, automobiles, roads, adhesives, waterproof material, coating film waterproof material, pattern-making agent, vibration proof material, vibration damping material, sound insulation material, foamed material, paint, spray material and the like. A cured product obtained by curing the curable composition of the present invention is more preferably used as a sealing material or an adhesive since it has excellent flexibility and adhesiveness.

Moreover, it can be used for various use applications, for example, electric or electronic component materials such as solar battery rear surface sealant and the like, electrical insulation material for an apparatus or an electric or electronic component such as insulation coating agents for electric wire or cable and the like, acoustically insulation material, elastic adhesive, binder, contact adhesive, spray-type sealing material, crack repairing material, tiling adhesive, adhesive for asphalt waterproof material, powder coating, casting material, medical rubber material, medical adhesive, medical adhesive sheet, sealing material for medical equipments, dental impression material, food packaging material, sealing material for joints of covering materials such as sizing board and the like, coating material, antislip coating material, buffer material, primer, electromagnetic shielding conductive material, thermally conductive material, hot melt material, electric or electronic potting agent, film, gasket, concrete reinforcing material, temporary adhesive, various molding material, and rustproof and waterproof sealing material for end face (cut section) of wire glass or laminate glass, automobile part, part for heavy vehicles such as motortruch, bus and the like, train vehicle part, aircraft part, boats or ships part, electrical component, liquid sealant used for various machine components and the like, and the like. Taking automobile for example, it can be used in a variety of ways, such as adhesion and attachment of plastic cover, trim, flange, bumper, window mounting, interior component, exterior component and the like. Furthermore, since the composition can adhere, singly or with the aid of primers, to a wide range of substrates such as glass, porcelain, wood, metal, resin molded articles and the like, it can also be used as various types of sealing compositions and adhesive compositions. The curable composition of the present invention can be used as adhesive for interior panels, adhesive for exterior panels, tiling adhesive, stone finishing adhesive, ceiling finishing adhesive, floor finishing adhesive, wall finishing adhesive, vehicle paneling adhesive, electric or electronic or precision equipment assembly adhesive, adhesive for binding leather, fiber product, cloth, paper, board and rubber, reactive post-crosslinking pressure sensitive adhesive, sealing material for direct glazing, multi-layer glass sealing material, SSG method sealing material, or structure working joint sealing material, material for civil engineering, bridge. Furthermore, it can also be used as an adhesive material such as an adhesive tape, an adhesive sheet and the like.

[Examples]

While the present invention is explained in more detail in the following by referring to Examples, Comparative Examples and Synthetic Example, the present invention is not limited by the following Examples.

In the following description, the number average molecular weight was measured using gel permeation chromatography (GPC) (Tosoh Corporation, HLC-8120GPC). As the column, TSKgelH type (Tosoh Corporation) was used. A tetrahydrofuran (THF) solution dissolving a polymer was prepared, and measurement was performed at 40°C. The weight average molecular weight (Mw), number average molecular weight (Mn), and weight average molecular weight/number average molecular weight (Mw/Mn) were calculated based on polystyrene as the standard.

The terminal group-based molecular weight is a molecular weight obtained by determining the hydroxyl value by the measurement method of JIS K 1557 and the iodine value by the measurement method of JIS K 0070, and determining in consideration of the structure of an organic polymer (branching degree determined by the polymerization initiator used).

The average number of carbon-carbon unsaturated bonds introduced into one terminal of polymer (Q) was calculated by the following calculation formula.

(average introduction number) = [unsaturated group concentration (mol/g) of polymer (Q) as determined from iodine value - unsaturated group concentration (mol/g) of prepolymer (P) as determined from iodine value]/[hydroxyl group concentration (mol/g) of prepolymer (P) as determined from hydroxyl value].

The average number of reactive silicon groups per one terminal portion of polymer (A) and the average number of reactive silicon groups per one molecule of polymer (A) were determined by a method including quantifying a proton on a carbon, to which a reactive silicon group is directly bonded, by a high-resolution $^1$HNMR measurement method.

That is, in the calculation of the average number of reactive silicon groups in polymer (A), a prepolymer into which a reactive silicon group was not introduced when the reactive silicon group was introduced into the prepolymer, as well as a polymer into which a reactive silicon group is not introduced, which is obtained by a side reaction, were regarded as a part of the components of polymer (A) having the same main chain structure and included in the parameter (molecule number) in the calculation of the average number of reactive silicon groups in one molecule.

The average number of reactive silicon groups per one molecule of polymer (B) was determined by dividing the number of moles of the reactive silicon group-containing monomer used by number average molecular weight (Mn) obtained by GPC.

(Synthetic Example 1)

Propylene oxide was polymerized using polypropylene glycol having a molecular weight of about 2,000 as an initiator and zinc hexacyanocobaltate glyme complex as a catalyst to give polyoxypropylene (P-1). Polyoxypropylene (P-1) had a hydroxyl group on both terminals, a number average molecular weight (Mn) of 27,900 (terminal group-based molecular weight 17,700), and molecular weight distribution Mw/Mn=1.21. A 28% methanol solution containing 1.0 molar equivalent of sodium methoxide relative to the hydroxyl group of the obtained hydroxyl group-terminal polyoxypropylene (P-1) was added. Methanol was evaporated by vacuum evaporation, and 1.0 molar equivalent of allyl glycidyl ether relative to the hydroxyl group of polymer (P-1) was added and the mixture was reacted at 130°C for 2 hr. Thereafter, a

methanol solution of 0.28 molar equivalent of sodium methoxide was added and methanol was removed. Furthermore, 1.79 molar equivalents of allyl chloride was added and the mixture was reacted at 130°C for 2 hr to convert the terminal hydroxyl group to an allyl group. Then, n-hexane (300 parts by weight) and water (300 parts by weight) were mixed and stirred with the obtained unrefined allyl group-terminal polyoxypropylene (100 parts by weight), and water was removed by centrifugation. Water (300 parts by weight) was further mixed and stirred with the obtained hexane solution, water was removed by centrifugation again, and hexane was removed by evaporation under reduced pressure. As a result, polyoxypropylene (Q-1) having a terminal structure containing more than one carbon-carbon unsaturated bond was obtained. It was found that polymer (Q-1) had 2.0 carbon-carbon unsaturated bonds on average introduced into one terminal portion.

A platinum divinyldisiloxane complex solution (isopropanol solution of 1,3-divinyl-1,1,3,3-tetramethyldisiloxane platinum (0)) (50 μl) was added to polyoxypropylene (Q-1) (500 g) and dimethoxymethylsilane (9.6 g) was slowly added dropwise with stirring. The mixed solution was reacted at 90°C for 2 hr, and the unreacted dimethoxymethylsilane was evaporated under reduced pressure to give polyoxypropylene (A-1) having a number average molecular weight of about 28,500. It was found that polymer (A-1) had 1.7 dimethoxymethylsilyl groups on average at one terminal, and 3.4 dimethoxymethylsilyl groups on average in one molecule.

(Synthetic Example 2)

A 28% methanol solution containing 1.0 molar equivalent of sodium methoxide relative to the hydroxyl group of the hydroxyl group-terminal polyoxypropylene (P-1) obtained in Synthetic Example 1 was added. Methanol was evaporated by vacuum evaporation, and 1.0 molar equivalent of allyl glycidyl ether relative to the hydroxyl group of polymer (P-1) was added and the mixture was reacted at 130°C for 2 hr. Thereafter, a methanol solution of 0.28 molar equivalent of sodium methoxide was added and methanol was removed. Furthermore, 1.79 molar equivalents of 3-chloro-1-propene was added and the mixture was reacted at 130°C for 2 hr to convert the terminal hydroxyl group to an allyl group. Then, n-hexane (300 parts by weight) and water (300 parts by weight) were mixed and stirred with the obtained unrefined allyl group-terminal polyoxypropylene (100 parts by weight), and water was removed by centrifugation. Water (300 parts by weight) was further mixed and stirred with the obtained hexane solution, water was removed by centrifugation again, and hexane was removed by evaporation under reduced pressure. As a result, polyoxypropylene (Q-2) having a terminal structure containing more than one carbon-carbon unsaturated bond was obtained. It was found that polymer (Q-2) had 2.0 carbon-carbon unsaturated bonds on average introduced into one terminal portion.

A platinum divinyldisiloxane complex solution (isopropanol solution of 1,3-divinyl-1,1,3,3-tetramethyldisiloxane platinum (0)) (50 μl) was added to the obtained polyoxypropylene (Q-2) (500 g) having 2.0 carbon-carbon unsaturated bonds on average at one terminal portion, and trimethoxysilane (10.5 g) was slowly added dropwise with stirring. The mixed solution was reacted at 90°C for 2 hr, and the unreacted trimethoxysilane was evaporated under reduced pressure to give polyoxypropylene (A-2) having a number average molecular weight of about 28,500. It was found that polymer (A-2) had 1.7 trimethoxysilyl groups on average at one terminal, and 3.4 trimethoxysilyl groups on average in one molecule.

(Synthetic Example 3)

A 28% methanol solution containing 1.2 molar equivalents of sodium methoxide relative to the hydroxyl group of the hydroxyl group-terminal polyoxypropylene (P-1) obtained in Synthetic Example 1 was added. Methanol was evaporated by vacuum evaporation, and 1.5 molar equivalents of allyl chloride relative to the hydroxyl group of polymer (P-1) was added to convert the terminal hydroxyl group to an allyl group. Unreacted allyl chloride was removed by evaporation under reduced pressure. Then, n-hexane (300 parts by weight) and water (300 parts by weight) were mixed and stirred with the obtained unrefined allyl group-terminal polyoxypropylene (100 parts by weight), and water was removed by centrifugation. Water (300 parts by weight) was further mixed and stirred with the obtained hexane solution, water was removed by centrifugation again, and hexane was removed by evaporation under reduced pressure. As a result, polyoxypropylene (Q-3) having an allyl group on a terminal portion was obtained. A platinum divinyldisiloxane complex solution (150 μl) was added to polyoxypropylene (Q-3) (500 g), and dimethoxymethylsilane (4.8 g) was slowly added dropwise with stirring. The mixture was reacted at 90°C for 2 hr, and the unreacted dimethoxymethylsilane was evaporated under reduced pressure to give polyoxypropylene (C-1) having a number average molecular weight of 28,500. It was found that polymer (C-1) had 0.8 dimethoxymethylsilyl group on average at one terminal, and 1.6 dimethoxymethylsilyl groups on average in one molecule.

(Synthetic Example 4)

A solution of 2,2'-azobis(2-methylbutyronitrile) (24.8 g) as a polymerization initiator dissolved in a mixture of methyl methacrylate (670 g), butyl acrylate (60 g), stearyl methacrylate (134 g), γ-methacryloxypropyldimethoxymethylsilane (55 g), γ-mercaptopropyldimethoxymethylsilane (73 g), and IBA (223 g) was added dropwise over 5 hr to isobutyl alcohol (hereinafter to be also referred to as "IBA") (412 g) heated to 105°C, and further, a solution of 2,2'-azobis(2-methylbutyronitrile) (2.8 g) as a polymerization initiator dissolved in IBA (45 g) was added dropwise over 1 hr. Thereafter, postpolymerization was performed for 2 hr to give (meth)acrylate copolymer (B-1) having a solid content concentration of 60%, a number average molecular weight of 2100, and 1.34 dimethoxymethylsilyl groups on average in one molecule.

(Synthetic Example 5)

A solution of 2,2'-azobis(2-methylbutyronitrile) (21.3 g) as a polymerization initiator dissolved in a mixture of methyl methacrylate (576 g), butyl acrylate (51 g), stearyl methacrylate (115 g), γ-methacryloxypropyldimethoxymethylsilane (182 g), n-dodecyl mercaptan (70 g), and IBA (192 g) was added dropwise over 5 hr to isobutyl alcohol (IBA) (450 g) heated to 105°C, and further, a solution of 2,2'-azobis(2-methylbutyronitrile) (2.4 g) as a polymerization initiator dissolved in IBA (21 g) was added dropwise over 1 hr. Thereafter, postpolymerization was performed for 2 hr to give (meth)acrylate copolymer (B-2) having a solid content concentration of 60%, a number average molecular weight of 2300, and 1.75 dimethoxymethylsilyl groups on average in one molecule.

(Synthetic Example 6)

A solution of 2,2'-azobis(2-methylbutyronitrile) (23 g) as a polymerization initiator dissolved in a mixture of methyl methacrylate (620 g), butyl acrylate (55 g), stearyl methacrylate (124 g), γ-methacryloxypropyldimethoxymethylsilane (128 g), γ-mercaptopropyldimethoxymethylsilane (67 g), and IBA (207 g) was added dropwise over 5 hr to isobutyl alcohol (IBA) (432 g) heated to 105°C, and further, a solution of 2,2'-azobis(2-methylbutyronitrile) (2.6 g) as a polymerization initiator dissolved in IBA (23 g) was added dropwise over 1 hr. Thereafter, postpolymerization was performed for 2 hr to give (meth)acrylate copolymer (B-3) having a solid content concentration of 60%, a number average molecular weight of 2100, and 1.98 dimethoxymethylsilyl groups on average in one molecule.

(Synthetic Example 7)

A solution of 2,2'-azobis(2-methylbutyronitrile) (12.4 g) as a polymerization initiator dissolved in a mixture of methyl methacrylate (335 g), butyl acrylate (30 g), stearyl methacrylate (67 g), γ-methacryloxypropyltrimethoxysilane (28 g), γ-mercaptopropyltrimethoxysilane (36 g), and IBA (112 g) was added dropwise over 5 hr to isobutyl alcohol (IBA) (206 g) heated to 105°C, and further, a solution of 2,2'-azobis(2-methylbutyronitrile) (1.4 g) as a polymerization initiator dissolved in IBA (22 g) was added dropwise over 1 hr. Thereafter, postpolymerization was performed for 2 hr to give (meth)acrylate copolymer (D-1) having a solid content concentration of 60%, a number average molecular weight of 2100, and 1.23 trimethylsilyl groups on average in one molecule.

(Synthetic Example 8)

A solution of 2,2'-azobis(2-methylbutyronitrile) (13.1 g) as a polymerization initiator dissolved in a mixture of methyl methacrylate (354 g), butyl acrylate (32 g), stearyl methacrylate (71 g), γ-mercaptopropyldimethoxymethylsilane (38 g), and IBA (118 g) was added dropwise over 5 hr to isobutyl alcohol (IBA) (198 g) heated to 105°C, and further, a solution of 2,2'-azobis(2-methylbutyronitrile) (1.4 g) as a polymerization initiator dissolved in IBA (24 g) was added dropwise over 1 hr. Thereafter, postpolymerization was performed for 2 hr to give (meth)acrylate copolymer (D-2) having a solid content concentration of 60%, a number average molecular weight of 2000, and 0.82 dimethoxymethylsilyl group on average in one molecule.

(Synthetic Example 9)

A solution of 2,2'-azobis(2-methylbutyronitrile) (22 g) as a polymerization initiator dissolved in a mixture of methyl methacrylate (600 g), butyl acrylate (54 g), stearyl methacrylate (120 g), γ-methacryloxypropyltrimethoxysilane (148 g), n-dodecyl mercaptan (73 g), and IBA (200 g) was added dropwise over 5 hr to isobutyl alcohol (IBA) (440 g) heated to 105°C, and further, a solution of 2,2'-azobis(2-methylbutyronitrile) (2.5 g) as a polymerization initiator dissolved in IBA (22 g) was added dropwise over 1 hr. Thereafter, postpolymerization was performed for 2 hr to give (meth)acrylate copolymer (D-3) having a solid content concentration of 60%, a number average molecular weight of 2100, and 1.23 trimethoxymethylsilyl groups on average in one molecule.

Table 1

| (meth)acrylate-based polymer | | Tg (°C) of homopolymer | B-1 | B-2 | B-3 | D-1 | D-2 | D-3 |
|---|---|---|---|---|---|---|---|---|
| monomer | MMA(1) | 105 | 670 | 576 | 620 | 335 | 354 | 600 |
| | BA(2) | -55 | 60 | 51 | 55 | 30 | 32 | 54 |
| | SMA(3) | -100 | 134 | 115 | 124 | 67 | 71 | 120 |
| | DSMA (4) | | 55 | 182 | 128 | | | |
| | TSMA(5) | | | | | 28 | | 148 |
| chain transfer agent | D-MSi(6) | | 73 | | 67 | | 38 | |
| | T-MSi(7) | | | | | 36 | | |
| | n-DM(8) | | | 70 | | | | 73 |
| Mn | | | 2100 | 2300 | 2100 | 2100 | 2000 | 2100 |
| average number of reactive silicon groups per one molecule | | | 1.34 | 1.75 | 1.98 | 1.23 | 0.82 | 1.23 |

(1) methyl methacrylate
(2) butyl acrylate
(3) stearyl methacrylate
(4) γ-methacryloxypropyldimethoxymethylsilane
(5) γ-methacryloxypropyltrimethoxysilane
(6) γ-mercaptopropyldimethoxymethylsilane
(7) γ-mercaptopropyltrimethoxysilane
(8) n-dodecyl mercaptan

(Example 1 Not Inventive)

A solution of methacrylate copolymer (B-1) obtained in Synthetic Example 4 was uniformly mixed with reactive silyl group-containing polyoxypropylene (A-1) (60 parts by weight) such that the solid content of polymer (B-1) was 40 parts by weight, and isobutyl alcohol was evaporated by a rotary evaporator to give a polymer mixture.

Tin octylate (3.0 parts by weight), laurylamine (0.5 parts by weight), water (0.6 parts by weight) were uniformly mixed by stirring with the obtained polymer mixture (100 parts by weight), and the mixture was defoamed by centrifugation, filled in a polyethylene frame while preventing entry of air bubble, and aged at 23°C, 50% RH for 1 hr, and further at 70°C for 20 hr to give a sheet with a thickness of about 3 mm. The sheet was punched out in a No. 3 dumbbell shape. A tensile strength test was performed at 23°C, 50% RH, and stress at 50% elongation (M5C), stress at 100% elongation (M100), strength at break (TB), and elongation at break (EB) were measured. The tensile strength was measured using an autograph (SHIMADZU CORPORATION, AGS-J) at a tension speed of 200 mm/min. The results are shown in Table 2.

(Examples (not inventive) Comparative Examples 1-5)

In the same manner as in Example 1 except that the polymers shown in Table 2 were used, curable compositions were prepared, from which sheet-like cured products were produced and evaluated. The results thereof are shown in Table 2.

Table 2

| | | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| polyoxyalkylene-based polymer | | A-1 | 60 | | 60 | 60 | | | 60 | 60 | 60 |
| | | A-2 | | 60 | | | | | | | |
| | | C-1 | | | | | 60 | 60 | | | |
| (meth) acrylate-based polymer | | B-1 | 40 | 40 | | | 40 | | | | |
| | | B-2 | | | 40 | | | 40 | | | |
| | | B-3 | | | | 40 | | | | | |
| | | D-1 | | | | | | | 40 | | |
| | | D-2 | | | | | | | | 40 | |
| | | D-3 | | | | | | | | | 40 |
| tin octylate | | | 3 | 3 | 3 | 3 | 3 | 3 | 3 | 3 | 3 |
| laurylamine | | | 0.5 | 0.5 | 0.5 | 0.5 | 0.5 | 0.5 | 0.5 | 0.5 | 0.5 |
| water | | | 0.6 | 0.6 | 0.6 | 0.6 | 0.6 | 0.6 | 0.6 | 0.6 | 0.6 |
| average number of reactive silicon groups per one molecule of (meth) acrylate-based polymer | | | 1.34 | 1.34 | 1.75 | 1.98 | 1.34 | 1.75 | 1.23 | 0.82 | 1.23 |
| dumbbell property | M50 | MPa | 0.24 | 0.23 | 0.41 | 0.81 | 0.14 | 0.26 | 0.94 | 0.15 | 0.85 |
| | M100 | MPa | 0.39 | 0.38 | 0.97 | 2.25 | 0.23 | 0.61 | 3.21 | 0.23 | 2.83 |
| | TB | MPa | 4.88 | 3.62 | 5.82 | 7.18 | 2.72 | 3.42 | 4.47 | 1.62 | 2.95 |
| | EB | % | 461 | 428 | 305 | 238 | 425 | 253 | 138 | 391 | 108 |

It is clear that Example 1 using A-1 as component (A) and B-1 as component (B) was improved in strength at break (TB) and elongation (EB), as compared to use of C-1 instead of A-1 (Comparative Example 1), and use, instead of B-1, of D-1 wherein the silyl group was a trimethoxysilyl group and D-2 wherein the number of silyl group was less than 1.0 per one molecule (Comparative Examples 3, 4). In addition, it is clear that Example 3 using A-1 as component (A) and B-2 as component (B) was also improved in both strength at break (TB) and elongation at break (EB), as compared to use, instead of B-2, of D-3 wherein the silyl group was a trimethoxysilyl group (Comparative Example 5) .

Furthermore, it is clear that the strength was improved by increasing the silyl group of component (B) per one molecule (Examples 3 and 4) .

(Example 5 - not inventive)

A solution of methacrylate copolymer (B-1) obtained in Synthetic Example 4 was uniformly mixed with reactive silyl group-containing polyoxypropylene (A-1) (60 parts by weight) such that the solid content of polymer (B-1) was 40 parts by weight, and isobutyl alcohol was evaporated by a rotary evaporator to give a polymer mixture.

The obtained polymer mixture (100 parts by weight) was mixed with HAKUENKA CCR (SHIRAISHI CALCIUM KAISHA, LTD.: precipitated calcium carbonate) (50 parts by weight), WHITON SB (Shiraishi Kogyo Kaisha, Ltd.: ground calcium carbonate) (50 parts by weight), and DISPARLON 6500 (Kusumoto Chemicals, Ltd.: fatty acid amide wax) (2 parts by weight), and uniformly dispersed in a three-roll mill. Thereafter, A-171 (Momentive Performance Materials Holdings Inc.: vinyltrimethoxysilane) (2 parts by weight), A-1110 (Momentive Performance Materials Holdings Inc.: γ-aminopropyltrimethoxysilane) (3 parts by weight), and U-220H (Nitto Kasei Co., Ltd.: dibutyltin bisacetylacetonate) (1 part by weight) were added, and mixed well with a spatula. The obtained composition was filled in a frame, and aged at 23°C, 50% RH for 3 days, and further at 50°C for 4 days to give a sheet-like cured product with a thickness of about 3 mm. The sheet was punched out in a No. 3 dumbbell shape. A tensile strength test was performed at 23°C, 50% RH, and stress at 50% elongation (M50), stress at 100% elongation (M100), strength at break (TB), and elongation at break (EB) were measured. The tensile strength was measured using an autograph (SHIMADZU CORPORATION, AGS-J) at a tension speed of 200 mm/min. The results are shown in Table 3.

(Examples 6 - 7 (not inventive) and Comparative Example 6-9)

In the same manner as in Example 5 except that the polymers shown in Table 3 were used, curable compositions were prepared, from which sheet-like cured products were produced and evaluated. The results thereof are shown in Table 3.

Table 3

| | | | Ex. 5 | Ex. 6 | Ex. 7 | Comp. Ex. 6 | Comp. Ex. 7 | Comp. Ex. 8 | Comp. Ex. 9 |
|---|---|---|---|---|---|---|---|---|---|
| polyoxyalkylene-based polymer | | A-1 | 60 | 60 | | | | 60 | 60 |
| | | A-2 | | | 60 | | | | |
| | | C-1 | | | | 60 | 60 | | |
| (meth) acrylate-based polymer | | B-1 | 40 | | 40 | 40 | | | |
| | | B-3 | | 40 | | | 40 | | |
| | | D-1 | | | | | | 40 | |
| | | D-2 | | | | | | | 40 |
| calcium carbonate | CCR | | 50 | 50 | 50 | 50 | 50 | 50 | 50 |
| | WHITON SB | | 5 0 | 50 | 50 | 50 | 50 | 50 | 50 |
| anti-sagging agent | DISPAPLON 6500 | | 2 | 2 | 2 | 2 | 2 | 2 | 2 |
| dehydrating agent | A-171 | | 2 | 2 | 2 | 2 | 2 | 2 | 2 |
| adhesion-imparting agent | A-1110 | | 3 | 3 | 3 | 3 | 3 | 3 | 3 |
| catalyst | U-220H | | 1 | 1 | 1 | 1 | 1 | 1 | 1 |
| average number of reactive silicon groups per one terminal portion of polyoxyalkylene-based polymer | | | 1.7 | 1.7 | 1.7 | 0.8 | 0.8 | 1.7 | 1.7 |
| reactive silicon group in (meth) acrylate-based polymer | | | dime thoxymethylsilyl | dimethoxymethylsilyl | dimethoxymethyl-silyl | dimethoxymethylsilyl | dimethoxymethylsilyl | trimethoxysilyl | trimethoxysilyl |
| average number of reactive silicon groups per one molecule of (meth) acrylate copolymer | | | 1.34 | 1.98 | 1.34 | 1.34 | 1.75 | 1.23 | 0.82 |
| dumbbell property | M50 | MPa | 1.49 | 4.35 | 1.70 | 1.04 | 2.54 | 4.43 | 1.62 |
| | M100 | MPa | 2.49 | 5.68 | 3.15 | 1.85 | 4.29 | - | 2.53 |
| | TB | MPa | 4.78 | 5.73 | 4.65 | 3.65 | 4.43 | 4.61 | 4.36 |
| | EB | % | 460 | 103 | 271 | 433 | 108 | 62 | 390 |

Example 5 using A-1 as component (A) and B-1 as component (B) was improved in strength at break (TB) and elongation at break (EB), as compared to use, instead of A-1, of C-1 (Comparative Example 6), and use, instead of B-1, of D-1 wherein the silyl group was a trimethoxysilyl group and D-2 wherein the number of silyl group was less than 1.0 per one molecule (Comparative Examples 8, 9). In addition, it is clear that Example 6 using A-1 as component (A) and B-3 as component (B) was also improved in both strength at break (TB) and elongation at break (EB), as compared to use of C-1 instead of A-1 (Comparative Example 7).

(Synthetic Example 10)

A solution of 2,2'-azobis(2-methylbutyronitrile) (3.0 g) as a polymerization initiator dissolved in a mixture of methyl methacrylate (59 g), butyl acrylate (422 g), stearyl methacrylate (89 g) γ-methacryloxypropyldimethoxymethylsilane (21 g), and IBA (27 g) was added dropwise over 5 hr to isobutyl alcohol (IBA) (212 g) heated to 105°C, and further, a solution of 2,2'-azobis(2-methylbutyronitrile) (0.9 g) as a polymerization initiator dissolved in IBA (8.4 g) was added dropwise over 1 hr. Thereafter, postpolymerization was performed for 2 hr to give (meth)acrylate copolymer (B-4) having a solid content concentration of 60%, a number average molecular weight of 9100, and 1.43 dimethoxymethylsilyl groups on average in one molecule.

(Synthetic Example 11)

A solution of 2,2'-azobis(2-methylbutyronitrile) (3.8 g) as a polymerization initiator dissolved in a mixture of methyl methacrylate (48 g), butyl acrylate (344 g), stearyl methacrylate (73 g), γ-methacryloxypropyltrimethoxysilane (19 g), and IBA (34 g) was added dropwise over 5 hr to isobutyl alcohol (IBA) (156 g) heated to 105°C, and further, a solution of 2,2'-azobis(2-methylbutyronitrile) (1.7 g) as a polymerization initiator dissolved in IBA (15 g) was added dropwise over 1 hr. Thereafter, postpolymerization was performed for 2 hr to give (meth)acrylate copolymer (D-4) having a solid content concentration of 60%, a number average molecular weight of 9200, and 1.40 trimethoxysilyl groups on average in one molecule.

(Synthetic Example 12)

A solution of 2,2'-azobis(2-methylbutyronitrile) (6.1 g) as a polymerization initiator dissolved in a mixture of 2-ethylhexyl acrylate (66 g), butyl acrylate (144 g), γ-methacryloxypropyltrimethoxysilane (10 g), and IBA (54 g) was added dropwise over 4 hr to isobutyl alcohol (IBA) (558 g) heated to 105°C, and further, a solution of 2,2'-azobis(2-methylbutyronitrile) (0.6 g) as a polymerization initiator dissolved in IBA (5 g) was added dropwise over 1 hr. Thereafter, postpolymerization was performed for 2 hr to give (meth)acrylate copolymer (E-1) having a solid content concentration of 60%, a number average molecular weight of 2400, and 0.43 trimethoxysilyl group on average in one molecule.

[Table 4]

| (meth)acrylate-based polymer | | Tg (°C) of homopolymer | B-4 | D-4 | E-1 |
|---|---|---|---|---|---|
| monomer | MHA(1) | 105 | 59 | 48 | |
| | BA(2) | -55 | 422 | 344 | 144 |
| | SMA(3) | -100 | 89 | 73 | |
| | 2-EHA(9) | | | | 66 |
| | DSMA(4) | | 21 | | |
| | TSMA(5) | | | 19 | 10 |
| Mn | | | 9100 | 9200 | 2400 |
| average number of reactive silicon groups per one molecule | | | 1.43 | 1.40 | 0.43 |

(1) methyl methacrylate
(2) butyl acrylate
(3) stearyl methacrylate
(9) 2-ethylhexyl acrylate
(4) γ-methacryloxypropyldimethoxymethylsilane
(5) γ-methacryloxypropyltrimethoxysilane

(Example 8 - not inventive)

A solution of methacrylate copolymer (B-4) obtained in Synthetic Example 11 was uniformly mixed with reactive silyl group-containing polyoxypropylene (A-1) (38 parts by weight) such that the solid content of polymer (B-4) was 62 parts by weight, and isobutyl alcohol was evaporated by a rotary evaporator to give a polymer mixture.

The obtained polymer mixture (100 parts by weight) was mixed with (meth)acrylate copolymer (E-1) (33 parts by weight) from which isobutyl alcohol had been evaporated by a rotary evaporator, HAKUENKA CCR (SHIRAISHI CALCIUM KAISHA, LTD.: precipitated calcium carbonate) (48 parts by weight), WHITON SB (Shiraishi Kogyo Kaisha, Ltd.: ground calcium carbonate) (48 parts by weight), and DISPARLON 6500 (Kusumoto Chemicals, Ltd.: fatty acid amide wax) (2 parts by weight), and uniformly dispersed in a three-roll mill. Thereafter, A-171 (Momentive Performance Materials Holdings Inc.: vinyltrimethoxysilane) (2 parts by weight), A-1110 (Momentive Performance Materials Holdings Inc.: γ-aminopropyltrimethoxysilane) (3 partys by weight), and U-220H (Nitto Kasei Co., Ltd.: dibutyltin bisacetylacetonate) (1 part by weight) were added, mixed well with a spatula, and stirred and defoamed by a planetary centrifugal mixer (trade name: THINKY MIXER). The obtained composition was filled in a frame, and aged at 23°C, 50% RH for 3 days, and further at for 4 days to give a sheet-like cured product with a thickness of about 3 mm. The sheet was punched cut in a No. 3 dumbbell shape. A tensile strength test was performed at 23°C, 50% RH, and stress at 50% elongation (M50), stress at 100% elongation (M100), strength at break (TB), and elongation at break (EB) were measured. The tensile strength was measured using an autograph (SHIMADZU CORPORATION, AGS-J) at a tension speed of 200 mm/min. The results are shown in Table 5.

(Comparative Examples 10 and 11)

[Table 5]

| | | | Ex. 8 | Comp. Ex. 10 | Comp. Ex. 11 |
|---|---|---|---|---|---|
| polyoxyalkylene-based polymer | | A-1 | 38 | | 38 |
| | | C-1 | | 38 | |
| (meth)acrylate-based polymer | | B-4 | 62 | 62 | |
| | | D-4 | | | 62 |
| plasticizer | E-1 | | 33 | 33 | 33 |
| calcium carbonate | CCR | | 48 | 48 | 48 |
| | WHITON SB | | 48 | 48 | 48 |
| anti-sagging agent | DISPARLON 6500 | | 2 | 2 | 2 |
| dehydrating agent | A-171 | | 2 | 2 | 2 |
| adhesion-imparting agent | A-1110 | | 3 | 3 | 3 |
| catalyst | U-220H | | 1 | 1 | 1 |
| average number of reactive silicon groups per one molecule of (meth)acrylate-based polymer | | | 1.43 | 1.43 | 1.40 |
| dumbbell property | M50 | MPa | 0.48 | 0.35 | 0.69 |
| | M100 | MPa | 1.29 | 1.03 | 1.71 |
| | TB | MPa | 2.00 | 1.59 | 1.77 |
| | EB | % | 155 | 150 | 105 |

In the same manner as in Example 5 except that the polymers shown in Table 5 were used, curable compositions were prepared, from which sheet-like cured products were produced and evaluated. The results thereof are shown in Table 5.

Example 8 using A-1 as component (A) and B-4 as component (B) was improved in strength at break (TB) and

elongation at break (EB), as compared to use, instead of A-1, of C-1 (Comparative Example 10), and use, instead of B-4, of D-4 wherein the silyl group was a trimethoxysilyl group (Comparative Example 11).

(Synthetic Example 13)

Isobutanol (26.7 parts by weight) was placed in a four-mouthed flask provided with a stirring machine, and the temperature was raised under a nitrogen atmosphere to 105°C. A mixed solution of methyl methacrylate (20.0 parts by weight), butyl methacrylate (36.0 parts by weight), stearyl methacrylate (32.0 parts by weight), 3-methacryloxypropyltrimethoxysilane (12.0 parts by weight), and 2,2'-azobis(2-methylbutyronitrile) (4.5 parts by weight) in isobutanol (40.6 parts by weight) was added dropwise thereto over 5 hr. Polymerization was performed at 105°C for 2 hr to give an isobutanol solution (solid content 60 wt%) of poly(meth)acrylate (polymer (B-5)) having 2.9 dimethoxymethylsilyl groups (reactive silicon group) on average in one molecule, and a number average molecular weight of 6,000.

(Synthetic Example 14)

Isobutanol (26.7 parts by weight) was placed in mouthed flask provided with a stirring machine, and the temperature was raised under a nitrogen atmosphere to 105°C. A mixed solution of methyl methacrylate (20.0 parts by weight), butyl methacrylate (43.0 parts by weight), stearyl methacrylate (32.0 parts by weight), 3-methacryloxypropyltrimethoxysilane (5.0 parts by weight), and 2,2'-azobis(2-methylbutyronitrile) (4.5 parts by weight) in isobutanol (40.6 parts by weight) was added dropwise thereto over 5 hr. Polymerization was performed at 105°C for 2 hr to give an isobutanol solution (solid content 60 wt%) of poly(meth)acrylate (polymer (B-6)) having 1.2 dimethoxymethylsilyl groups (reactive silicon group) on average in one molecule, and a number average molecular weight of 5,900.

(Synthetic Example 15)

Isobutanol (48.6 parts by weight) was placed in a four-mouthed flask provided with a stirring machine, and the temperature was raised under a nitrogen atmosphere to 105°C. A mixed solution of methyl methacrylate (20.0 parts by weight), butyl methacrylate (36.0 parts by weight), stearyl methacrylate (32.0 parts by weight), 3-methacryloxypropyltrimethoxysilane (12.0 parts by weight), n-dodecyl mercaptan (8.0 parts by weight), and 2,2'-azobis(2-methylbutyronitrile) (1.8 parts by weight) in isobutanol (25.2 parts by weight) was added dropwise thereto over 5 hr. Polymerization was performed at 105°C for 2 hr to give an isobutanol solution (solid content 60 wt%) of poly(meth)acrylate (polymer (B-7)) having 1.2 dimethoxymetylsilyl groups (reactive silicon group) on average in one molecule, and a number average molecular weight of 2,500.

[Table 6]

| constitutional monomer of (meth)acrylate-based polymer | | Tg (°C) of homopolymer | B-5 | B-6 | B-7 |
|---|---|---|---|---|---|
| monomer | MMA(1) | 105 | 20 | 20 | 20 |
| | BMA(2) | 20 | 36 | 43 | 36 |
| | SMA(3) | -100 | 32 | 32 | 32 |
| | DSMA(4) | - | 12 | 5 | 12 |
| chain transfer agent | n-DM(5) | - | | | 8 |
| Mr. | | | 6000 | 5900 | 2500 |
| average number of reactive silicon groups per one molecule | | | 2.90 | 1.20 | 1.20 |

(1) methyl methacrylate
(2) n-butyl methacrylate
(3) stearyl methacrylate
(4) 3-methacryloxypropyldimethoxynethylsilane
(5) n-dodecyl mercaptan

The polymer (A-1) (60.0 parts by weight) obtained in Synthetic Example 1 and an isobutanol solution (66.7 parts by weight) of polymer (B-5) obtained in Synthetic Example 13 were mixed, and isobutanol was evaporated under reduced pressure to give a polymer mixture having a weight ratio of polymer (A-1)/polymer (B-5) of 60/40.

The viscosity of a curable composition (free of dehydrating agent, adhesion-imparting agent and catalyst shown

in Table 7) was measured at 23°C, relative humidity 50% by an E-type viscometer (TOKYO KEIKI INC., measurement cone: 3°C×R14). The results thereof are shown in the following Table 7.

Vinyltrimethoxysilane (Momentive Performance Materials Holdings Inc., trade name: A-171) (1 part by weight), N-(2-aminoethyl)-3-aminopropyltrimethoxysilane (Shin-Etsu Chemical Co., Ltd., trade name: KBM-603) (2 parts by weight), and dioctyltin dilaurate (Nitto Kasei Co., Ltd., trade name: NEOSTANN U-810) (0.5 parts by weight) were added to 100 parts by weight in total content of polymer (A-1) and polymer (B-5), and the mixture was sufficiently mixed. The obtained composition was filled in a 3 mm-thick polyethylene frame without allowing entry of bubbles, and aged at 23°C, relative humidity 50% for 3 days, and further at 50°C for 4 days to give a sheet-like cured product. A No. 7 dumbbell was punched out from the obtained cured product according to JIS K 6251, subjected to a tensile test (tension speed 200 mm/min, 23°C, relative humidity 50%) and modulus at 50% elongation (M50), tensile strength at break (TB), and elongation at break (EB) were measured. The results thereof are shown in the following Table 7.

((Examples 10,11 -not inventive)

Using polymer (A), polymer (B), dehydrating agent, adhesiveness-imparting agent and catalyst in the kinds and amounts shown in the following Table and in the same manner as in Example 9, curable compositions were prepared, from which sheet-like cured products were produced and evaluated. As the viscosity, the viscosity of curable compositions fee of dehydrating agent, adhesiveness-imparting agent and catalyst, shown in the following Table 7, was measured. The results thereof are shown in the following Table 7.

[Table 7]

| | | | Ex. 9 | Ex. 10 | Ex. 11 |
|---|---|---|---|---|---|
| polyoxyalkylene-based polymer | | A-1 | 60 | 60 | 60 |
| (meth)acrylate-based polymer | | B-5 | 40 | | |
| | | B-6 | | 40 | |
| | | B-7 | | | 40 |
| viscosity 23°C | | Pa·s | 98 | 109 | 35 |
| dehydrating agent | A-171 | | 1 | 1 | 1 |
| adhesiveness-imparting agent | KBM-603 | | 2 | 2 | 2 |
| catalyst | NEOSTANN U-810 | | 0.5 | 0.5 | 0.5 |
| average number of reactive silicon groups per one molecule of (meth)acrylate-based polymer | | | 2.90 | 1.20 | 1.20 |
| dumbbell property | M50 | MPa | 0.61 | 0.28 | 0.25 |
| | TB | MPa | 7.90 | 1.80 | 1.29 |
| | EB | % | 340 | 380 | 340 |

As shown in Table 7, Example 9 containing polymer B-5 comprising monomer (b2) having a glass transition point of homopolymer of not more than 80°C, and free of a reactive silicon group in a proportion of not less than 40 wt% of the whole constitutional units, and having not less than 1.6 reactive silicon groups and a number average molecular weight of not less than 4,000 affords a cured product having high tensile strength and high elongation rate.

This application claims the priority of patent application No. 2014-137086 filed in Japan.

## Claims

1. A curable composition comprising reactive silicon group-containing polyoxyalkylene-based polymer (A) having more than 1.0 reactive silicon group on average at one terminal portion, and reactive silicon group-containing (meth)acrylate-based polymer (B) having not less than 1.6 reactive silicon group on average per one molecule, which is represented by the formula (1) :

$$-SiRX_2 \quad (1)$$

wherein R is a hydrocarbon group having 1 - 20 carbon atoms and optionally having substituent(s) which is/are a hetero atom-containing group or a halogen atom, and X is a hydroxyl group or a hydrolyzable group, wherein
the reactive silicon group-containing (meth)acrylate-based polymer (B) comprises not less than 40 wt% of a monomer (b2) unit having a glass transition point of homopolymer of not more than 80°C, and free of a reactive silicon group, and the reactive silicon group-containing (meth)acrylate-based polymer (B) has a number average molecular weight of not less than 4,000 measured by GPC (based on polystyrene)

2. The curable composition according to claim 1, wherein the terminal portion of the polyoxyalkylene-based polymer (A) has a structure represented by the formula (2):

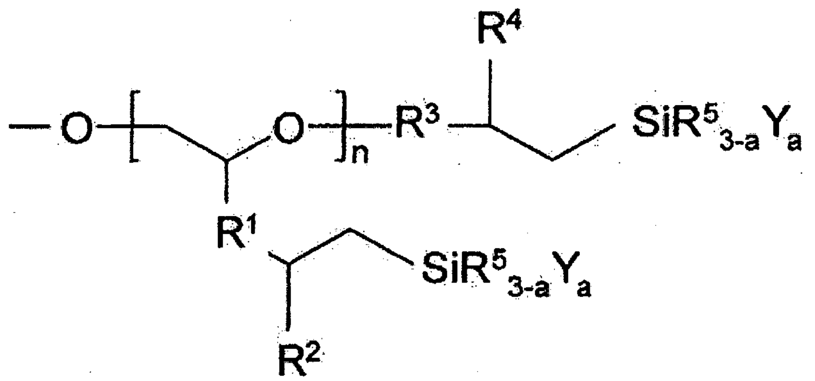

(2)

wherein $R^1$ and $R^3$ are each independently a divalent linking group having 1 - 6 carbon atoms, and an atom that binds to each adjacent carbon atom is any of carbon, oxygen and nitrogen, $R^2$ and $R^4$ are each independently hydrogen or a hydrocarbon group having 1 - 10 carbon atoms, n is an integer of 1 to 10, each $R^5$ is independently a hydrocarbon group having 1 - 20 carbon atoms and optionally having substituent(s) which is/are a hetero atom-containing group or a halogen atom, Y is a hydroxyl group or a hydrolyzable group, and a is any of 1, 2 and 3.

3. The curable composition according to claim 1 or 2, wherein the reactive silicon group-containing polyoxyalkylene-based polymer (A) is obtained by allowing an action, on a polymer having a hydroxyl group on the terminal, of 0.6 equivalent or more of an alkali metal salt relative to the hydroxyl group, which is followed by a reaction with an epoxy compound having a carbon-carbon unsaturated bond, a reaction with a halogenated hydrocarbon compound having a carbon-carbon unsaturated bond, and introduction of a reactive silicon group into the carbon-carbon unsaturated group by a hydrosilylation reaction.

4. The curable composition according to any one of claims 1 to 3, wherein a content ratio of the reactive silicon group-containing polyoxyalkylene-based polymer (A) and the reactive silicon group-containing (meth)acrylate-based polymer (B) ((A)/(B)) is 90/10 - 20/80 in a weight ratio.

5. A cured product obtained by curing the curable composition according to any one of claims 1 to 4.

## Patentansprüche

1. Eine härtbare Zusammensetzung, umfassend ein reaktives Siliziumgruppen enthaltendes Polymer auf Polyoxyalkylenbasis (A) mit durchschnittlich mehr als 1,0 reaktiven Siliziumgruppen an einem Endabschnitt, und ein reaktives Siliziumgruppen enthaltendes Polymer auf (Meth)acrylatbasis (B) mit durchschnittlich nicht weniger als 1,6 reaktiven Siliziumgruppen pro einem Molekül, dargestellt durch die Formel (1):

$$-SiRX_2 \qquad (1)$$

wobei R eine Kohlenwasserstoffgruppe mit 1 bis 20 Kohlenstoffatomen ist und gegebenenfalls (einen) Substituenten aufweist, welcher/welche eine Heteroatom enthaltende Gruppe oder ein Halogenatom darstellt/darstellen, und X eine Hydroxylgruppe oder eine hydrolysierbare Gruppe ist, wobei
das reaktive Siliziumgruppen enthaltende Polymer auf (Meth)acrylatbasis (B) nicht weniger als 40 Gew.-% einer

Monomereinheit (b2) umfasst, das einen Glasübergangspunkt für das Homopolymer von nicht mehr als 80°C aufweist und frei von einer reaktiven Siliziumgruppe ist, und
das reaktive Siliziumgruppen enthaltende Polymer auf (Meth)acrylatbasis (B) ein Zahlenmittel des Molekulargewichts von nicht weniger als 4,000 aufweist, gemessen durch GPC (auf Basis von Polystyrol).

**2.** Die härtbare Zusammensetzung gemäß Anspruch 1, wobei der Endabschnitt des Polymers auf Polyoxyalkylenbasis (A) eine Struktur aufweist, dargestellt durch die Formel (2):

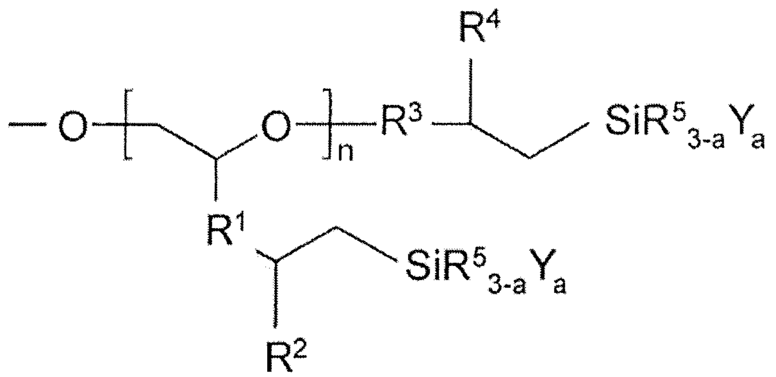

(2)

wobei $R^1$ und $R^3$ jeweils unabhängig eine zweiwertige Verbindungsgruppe mit 1 - 6 Kohlenstoffatomen darstellen und ein Atom, welches an jedes benachbarte Kohlenstoffatom bindet, ein beliebiges aus Kohlenstoff, Sauerstoff und Stickstoff ist, $R^2$ und $R^4$ jeweils unabhängig Wasserstoff oder eine Kohlenwasserstoffgruppe mit 1 - 10 Kohlenstoffatomen darstellen, n eine ganze Zahl von 1 bis 10 ist, jedes $R^5$ unabhängig eine Kohlenwasserstoffgruppe mit 1 - 20 Kohlenstoffatomen ist und gegebenenfalls mit (einem) Substituenten, welcher/welche eine Heteroatom enthaltende Gruppe oder ein Halogenatom darstellt/darstellen, Y eine Hydroxylgruppe oder eine hydrolisierbare Gruppe ist und a ein beliebiges aus 1, 2 und 3 ist.

**3.** Die härtbare Zusammensetzung gemäß Anspruch 1 oder 2, wobei das reaktive Siliziumgruppen enthaltende Polymer auf Polyoxyalkylenbasis (A) durch Zulassen eines Einwirkens auf ein Polymer mit einer endständigen Hydroxylgruppe, von 0,6 Äquivalent oder mehr eines Alkalimetallsalzes, bezogen auf die Hydroxylgruppe, welches gefolgt wird, von einer Reaktion mit einer Epoxidverbindung mit einer ungesättigten Kohlenstoff-Kohlenstoff-Bindung, einer Reaktion mit einer halogenierten Kohlenwasserstoffverbindung mit einer ungesättigten Kohlenstoff-Kohlenstoff-Bindung und Einbringen einer reaktiven Siliziumgruppe in die ungesättigte Kohlenstoff-Kohlenstoff-Gruppe durch eine Hydrosilylierungs-Reaktion.

**4.** Die härtbare Zusammensetzung gemäß einem der Ansprüche 1 bis 3, wobei ein Gehaltsverhältnis des reaktiven Siliziumgruppen enthaltenden Polymers auf Polyoxyalkylenbasis (A) und des reaktiven Siliziumgruppen enthaltenden Polymers auf (Meth)acrylatbasis (B) ((A)/(B)) gleich 90/10 - 20/80 als Gewichtsverhältnis ist.

**5.** Ein gehärtetes Produkt, erhalten durch Härten der härtbaren Zusammensetzung gemäß einem der Ansprüche 1 bis 4.

## Revendications

**1.** Composition durcissable comprenant un polymère à base de polyoxyalkylène contenant un groupe silicium réactif (A) ayant plus de 1,0 groupe silicium réactif en moyenne au niveau d'une partie terminale, et un polymère à base de (méth)acrylate contenant un groupe silicium réactif (B) ayant au moins 1,6 groupes silicium réactifs en moyenne par molécule, qui est représenté par la formule (1) :

$$-SiRX_2 \qquad (1)$$

dans laquelle R est un groupe hydrocarboné ayant 1 à 20 atomes de carbone et portant éventuellement un ou plusieurs substituants qui sont des groupes contenant un hétéroatome ou des atomes d'halogène, et X est un groupe hydroxyle ou un groupe hydrolysable,
dans laquelle le polymère à base de (méth)acrylate contenant un groupe silicium réactif (B) comprend au moins 40 % en poids d'un motif monomère (b2) ayant un point de transition vitreuse de l'homopolymère non supérieure à 80

°C, et exempt de groupe silicium réactif, et le polymère à base de (méth)acrylate contenant un groupe silicium réactif (B) a une masse moléculaire moyenne en nombre non inférieure à 4 000, mesurée par GPC (sur la base du polystyrène).

2. Composition durcissable selon la revendication 1, dans laquelle la partie terminale du polymère à base de polyoxyalkylène (A) a une structure représentée par la formule (2) :

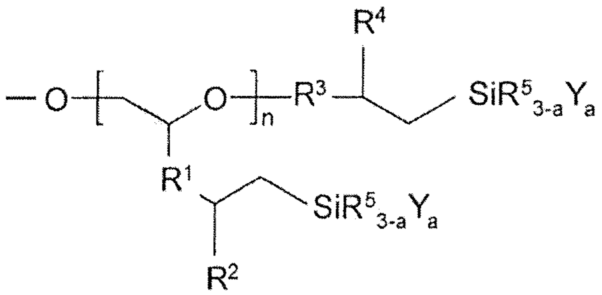

(2)

dans laquelle chacun de $R^1$ et $R^3$ est indépendamment un groupe de liaison divalent ayant 1 à 6 atomes de carbone, et un atome qui se lie à chaque atome de carbone adjacent est l'un quelconque parmi le carbone, l'oxygène et l'azote, chacun de $R^2$ et $R^4$ est indépendamment l'hydrogène ou un groupe hydrocarboné ayant 1 à 10 atomes de carbone, n est un entier de 1 à 10, chaque $R^5$ est indépendamment un groupe hydrocarboné ayant 1 à 20 atomes de carbone et portant éventuellement un ou plusieurs substituants qui sont des groupes contenant un hétéroatome ou des atomes d'halogène, Y est un groupe hydroxyle ou un groupe hydrolysable, et a est l'un quelconque parmi 1, 2 et 3.

3. Composition durcissable selon la revendication 1 ou 2, dans laquelle le polymère à base de polyoxyalkylène contenant un groupe silicium réactif (A) est obtenu par l'opération consistant à laisser agir, sur un polymère ayant un groupe hydroxyle sur l'extrémité, 0,6 équivalent ou plus d'un sel de métal alcalin par rapport au groupe hydroxyle, opération suivie d'une réaction avec un composé époxy ayant une liaison insaturée carbone-carbone, d'une réaction avec un composé hydrocarboné halogéné ayant une liaison insaturée carbone-carbone, et de l'introduction d'un groupe silicium réactif dans le groupe insaturé carbone-carbone par une réaction d'hydrosilylation.

4. Composition durcissable selon l'une quelconque des revendications 1 à 3, dans laquelle le rapport en poids des teneurs en le polymère à base de polyoxyalkylène contenant un groupe silicium réactif (A) et en le polymère à base de (méth)acrylate contenant un groupe silicium (B) ((A)/(B)) est de 90/10 à 20/80.

5. Produit durci obtenu par durcissement de la composition durcissable selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7258535 A
- JP 2006037076 A
- JP 2012107103 A
- JP 2013147575 A
- WO 2013180203 A
- JP 2003500378 A
- JP 11130931 A
- JP 59122541 A
- JP 63112642 A
- JP 6172631 A
- JP 11116763 A
- JP 59078223 A
- JP 60228516 A
- JP 60228517 A
- JP 2004051701 A
- JP 2004066749 A
- JP 11349916 A
- JP 2003155389 A
- JP 4283259 A
- JP 9194731 A
- JP 5070531 A
- JP 5117521 A
- JP 11241029 A
- JP 3160053 A
- JP 2014137086 A


### Non-patent literature cited in the description


- **GEV.** *GEV Specification and Classification Criteria,* 14 February 2001
- *Journal of the American Chemical Society (J. Am. Chem. Soc.),* 1994, vol. 16, 7943
- **J. BRANDRUP.** POLYMER HANDBOOK
- Photosensitive Resin. Insatsu Gakkai Shuppanbu Ltd, 17 March 1972, 93, , 106, , 117